# EUROPÄISCHE PATENTSCHRIFT

(11) **EP 2 744 700 B1**
(45) Veröffentlichungstag und Bekanntmachung des Hinweises auf die Patenterteilung: **24.08.2016**
(21) Anmeldenummer: 12743641.8
(22) Anmeldetag: 18.07.2012
(51) Int. Cl.: B62M 9/08

(54) **MECHANIK ZUM ÜBERTRAGEN EINER DREHBEWEGUNG MIT VERÄNDERBARER ÜBERSETZUNG**
MECHANISM FOR TRANSMITTING A ROTARY MOVEMENT WITH VARIABLE TRANSMISSION RATIO
MÉCANISME DESTINÉ À TRANSMETTRE UN MOUVEMENT DE ROTATION AVEC UN RAPPORT VARIABLE

(30) Priorität: 27.07.2011 AT 11002011
(43) Veröffentlichungstag der Anmeldung: 25.06.2014
(73) Patentinhaber: Vyro Components GmbH, 2500 Baden (AT)
(72) Erfinder: SCHUSTER, Gregor, 2500 Baden (AT)
(74) Vertreter: Keschmann, Marc
(86) Internationale Anmeldenummer: PCT/AT2012/050109
(87) Internationale Veröffentlichungsnummer: WO 2013/013256

(56) Entgegenhaltungen:
- DE-U1- 8 612 893
- US-A- 4 634 406
- US-A1- 2002 084 618

## Beschreibung

### Gebiet der Erfindung und technischer Hintergrund

Die Erfindung betrifft das Gebiet der mehrstufigen Getriebe zur Kraftübertragung mit endlosen, gegliederten oder flexiblen zugkraftübertragenden Mitteln, wie z.B. einen Riemen oder eine Kette. Im Besonderen betrifft die Erfindung eine Stellmechanik zum Einstellen eines Übersetzungsverhältnisses zwischen einem Zugmittel, wie z.B. einer Kette oder einem Riemen, und einem um eine Radachse drehbaren Radsatz, welcher zwei oder mehr Radblätter umfasst. Von den Radblättern wird je nach Wahl eines von dem Zugmittel umschlungen; zumindest eines der Radblätter ist aus mehreren voneinander unabhängig stellbaren Radkranzsektoren zusammengesetzt, wobei durch die Stellmechanik ein Verstellen der Radkranzsektoren in Bezug auf eine festbleibende Ebene, in der das Zugmittel den Radsatz umschlingt, in einer im Wesentlichen quer zu dieser Ebene liegenden Richtung bewirkt wird.

Die Erfindung befasst sich mit der Überlegung zur Änderung des Übersetzungsverhältnisses bei Kraftübertragungseinrichtüngen, die sektorierte, geteilte oder unterbrochene Anund/oder Abtriebsräder - oder Blöcke bestehend aus solchen Räderkomponenten - aufweisen. Solche Übersetzungen sind beispielsweise in Gangschaltungen bei Fahrrädern bekannt, worin eine Transmission zwischen Rad und Zugmitteln zweimal erfolgt, nämlich zum einen von einem Kurbelrad auf eine Kette, und zum anderen von der Kette auf das Antriebsrad (welches regelmäßig das Hinterrad des Fahrrads ist).

Für änderbare Übersetzungen sind mehrere Lösungsprinzipien bekannt.

Ein erster bekannter Ansatz besteht in einer Umwerferschaltung. Solche Systeme sind hinlänglich bekannt (vgl. z.B. US 3,448,628). Ein Werfer führt die Kette und bewegt diese axial auf den Kettenblättern mit unterschiedlichen Durchmessern, die sich nebeneinander angeordnet auf einer Achse befinden. Dadurch wird das Übersetzungsverhältnis zur Kettenbewegung und in der Folge zu einem weiteren, in der Flucht der Kette befindlichen Kettenblatt (das dem angetriebenen oder dem kraftabführenden Rad entspricht) geändert.

Hierbei entstehen oftmals Nachteile dadurch, dass die Kette aus ihrer Flucht bewegt wird, und dadurch höhere Reibung in der Kette auftritt, beziehungsweise eben dadurch die Kette selbst höher belastet wird, was zu Materialermüdung führt. Ein weiterer Nachteil ist, dass sich die Kette während des Schaltvorganges teilweise auf zwei Kettenblättern befindet, weshalb während dieses Zeitraumes keine Kraft übertragen werden kann. Ein Schalten während des Lastbetriebes ist somit nicht möglich; vielmehr muss beim Schaltvorgang die Antriebskraft auf ein Minimum reduziert werden, um einen Schaltvorgang ohne Materialschädigung durchführen zu können. Um große Übersetzungsverhältnisse zu realisieren, d.h. um Kettenblätter mit sehr unterschiedlich großen Durchmessern auf einer Achse anzuordnen, ist es nötig, mehrere der Größe nach ansteigende Kettenblätter in Kegelform so anzuordnen, dass die Kette diese als Steighilfe benützen kann, selbst wenn diese tatsächlich nicht für die Übersetzung benötigt werden. Zudem können Erschütterungen dazu führen, dass die Kette auf benachbarte Kettenblätter springt, was wiederum zu Problemen im Lastbetrieb führt.

Bei Anordnung zweier Umwerferschaltungen in einer Getriebestufe, also sowohl an der angetriebenen als auch an der kraftabführenden Achse, um besonders vielfältige und/oder große Übersetzungsverhältnisse zu realisieren, ist überdies darauf zu achten, die Kettenblätter so zu wählen, dass die Kette nicht zu sehr aus der Flucht läuft, da dies zu großer Materialbeanspruchung führt. Ein weiterer Nachteil ist, dass die Umwerfer meist an exponierten Stellen liegen, wie insbesondere beim Fahrrad häufig der Fall ist, und dadurch bei Geländefahrten durch z.B. Buschwerk beschädigt werden können. Auf Grund der vielen axial nebeneinander angeordneten Kettenblätter benötigen Umwerferschaltungen auch relativ viel Platz wodurch wiederum eine Schaltung mit dem vollen Repertoire an Übersetzungsverhältnissen sich an der besser geschützten, aber räumlich sehr beschränkten Kurbelwelle nicht realisieren lässt.

Ein alternativer Ansatz sind Getriebeschaltungen. Darin wird die Änderung der Übersetzungsverhältnisse von einem Zahnradgetriebe bewerkstelligt, beispielsweise einem Planetengetriebe; der Kettentrieb dient lediglich als kraftübertragendes Element. Solche Systeme kommen zum Großteil in der Hinterradnabe des Fahrrades zur Anwendung. Der Nachteil hierbei ist, das hohe Gewicht, das solche Zahnradgetriebe haben, sowie der hohe konstruktive und wirtschaftliche Aufwand.

Ein anderer alternativer Ansatz verwendet Kegelräder und Stufenscheiben. Hierbei werden im Wesentlichen zwei abgestufte oder kegelförmig ausgeformte Scheiben vorgesehen, zwischen denen das Zugmedium läuft. Durch axiale Abstandsänderung der Scheiben wird das Zugmedium auf verschiedene Umschlingungsradien gezwungen, und auf diese Weise wird das Übersetzungsverhältnis geändert. Dieses Prinzip eignet sich nur für reibschlüssige und nicht für formschlüssige Zugmedien, wie es Ketten oder Zahnriemen darstellen.

Dagegen liegt der Erfindung der Ansatz der Verwendung mehrstufiger Kettengetriebe mit sektorierten, geteilten und/ oder unterbrochenen Zahnkränzen zugrunde. Hier ist das betrachtete An- oder Abtriebsrad gewissermaßen in Komponenten aufgeteilt, die sukzessive in die Flucht der Kette eingebracht werden. Das Zugmittel dagegen bewegt sich in einer festbleibenden Ebene, wobei eine seitliche Bewegung des Zugmittels nicht erforderlich bzw. sogar unterbunden ist. Im Folgenden wird die Ebene, in der das Zugmittel verläuft, als "Ebene des Zugmittels" oder kurz "Fluchtebene" bezeichnet.

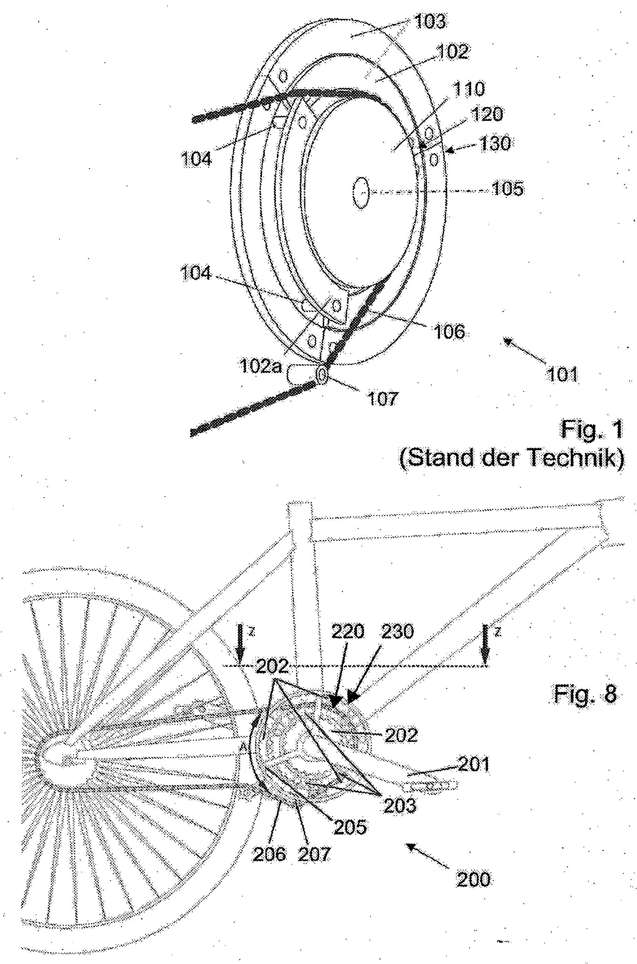

Fig. 1 illustriert das der Erfindung zu Grunde liegende, bereits bekannte Prinzip der Änderung des Übersetzungsverhältnisse durch das axiale Zuführen von Sektoren in die Flucht des Zugmediums. Gezeigt ist ein Radsatz 101 mit drei Radblättern 110, 120,130, die jeweils einer An- oder Abtriebsscheibe für je ein Übersetzungsverhältnis oder "Gang" entsprechen. Während das innerste Radblatt 110 ungeteilt und axial fixiert ist, sind das mittlere Radblatt 120 und das äußere Radblatt 130 jeweils in Sektoren 102, 103 (in der Regel entsprechend Kreisringsektoren) aufgeteilt, im gezeigten Beispiel in je drei Sektoren, die einem Winkel von knapp 120° entsprechen. Der Winkel ist geringfügig kleiner als 360°/n (hier n = 3), um ein Spiel zwischen den einzelnen Sektoren zu erlauben. Die Sektoren 102, 103 sind zueinander entlang der Richtung der Achse 105 beweglich gelagert, jedoch in Bezug auf die Drehung drehfest. Diese Lagerung erfolgt über geeignete Mittel wie z.B. eine Zapfenführung 104 od.dgl.

Aus Fig. 1 geht der Beginn eines Umschaltvorgangs von dem Gang des kleinsten Rades 110 zu jenem des mittleren Rades 120 hervor. Die Kette 106 umschlingt noch das Radblatt 110. Eine oder mehrere Führungsrollen 107 dienen der Vergrößerung des von der Kette 106 nicht umschlungenen Winkelbereichs. Ein erster Sektor 102a des mittleren Radblatts 120, nämlich jener, der sich aktuell im nicht umschlungenen Winkelbereich befindet, wird in die Flucht der Kette 106 eingerückt. Im Laufe der Drehbewegung des Radsatzes nimmt der Sektor 102a die Kette auf. In weiterer Folge können die übrigen Sektoren des Radblatts 120, sobald sie jeweils in den nicht umschlungenen Winkelbereich gelangt sind, in gleicher Weise in die Flucht der Kette eingerückt werden; wenn dies für alle Sektoren 102 erfolgt ist, ist der Wechsel auf den Gang, der dem mittleren Rad 120 entspricht zu Ende geführt.

Dieser auf den Einsatz von sektorierten, geteilten und/oder unterbrochenen Zahnkränze beruhende Ansatz überwindet die Nachteile der vorher genannten Ansätze. Ein Schalten während des Lastbetriebes ist möglich, da die Kette sich auch während des Schaltvorganges im Eingriff mit den Kettenblättern beider Übersetzungsverhältnisse (und nur mit diesen) befindet. Der Platzbedarf solcher Schaltungen kann geringer ausgeführt werden.

Einige Lösungen bedienen sich des Prinzips des temporären Verfahrens der geteilten, sektorierten oder unterbrochenen Zahnkränze, nur während des Schaltvorganges selbst, um die Kette auf den nächst größeren oder kleineren Durchmesser "zu holen". Solche Lösungen sind z.B. in US 4,127,038 oder US 4,580,997 beschrieben. Hierbei wird die Kette durch Einschwenken oder axiale Bewegung des größeren oder kleineren benachbarten Kettenblattsektors in die Flucht des nächsten Kettenblattes geholt. Die Flucht der Kette verändert sich demnach bei dem Wechsel des Übersetzungsverhältnisses.

Die CH 617 992 A5 zeigt ein Prinzip bei dem die Kettenblattsektoren nach und nach der Flucht der Kette zugeführt werden. Die Kettenblattsektoren sind einzeln mittels Bolzen auf einer mitrotierenden Vorrichtung gelagert. Dadurch wird eine kleinere Bauform ermöglicht. Dies macht es prinzipiell möglich eine Kettenschaltung, die das gesamte Spektrum an Übersetzungsverhältnissen an nur einer Achse bereitstellt, zu konstruieren.

Bei allen derzeit bekannten Prinzipien wird die Bewegung der Kettenblattsektoren durch die Berührung des drehenden Teiles über z.B. Bolzen mit einem fest stehenden Teil, d.h. einem relativ zur rotierenden Einheit, auf der sich die Sektoren befinden, unbewegten Teil, z.B. einem radial verfahrbaren Schlitten, erreicht. Dadurch entsteht der Nachteil, dass bei Betrieb des Systems ständig eine Berührung und somit Reibung besteht. Dies führt neben unerwünschter Belastung und Verschleiß auch zu Geräuschentwicklung. Dies macht solche Prinzipien in der Praxis unkomfortabel und stellt keine praktikable Lösung dar.

Problematisch ist bei dieser bekannten Lösung, wie die Zuführung der Kettenblattsektoren in die Flucht der Kette durch die Betätigung einzelner Bolzen erfolgt. Da jeder Zahnkranzsektor auf zwei oder mehr Bolzen gelagert sein muss, werden diese bei der Betätigung nur eines Bolzens zum Verklemmen neigen und eine Bewegung der Zahnsektoren unmöglich machen. Um dies zu vermeiden, zeigt CH 617 992 A5 auch die Lagerung von Viertelkreissektoren auf jeweils drei Bolzen und eine Mechanik, die ein Einschwenken der Bolzen (im Gegensatz zu Parallelführung der Sektoren) ermöglichen soll. Die Führung und Rastung von drei Bolzen pro Sektor ergibt aber den Nachteil, dass eine Auslenkung eines Sektors nicht mit akzeptablem Aufwand möglich ist. Problematisch ist auch, wie die einzelnen Sektoren nach Verlassen des fest stehenden Führungsschlittens ihre Position in oder außerhalb des Eingriffes beibehalten sollen. Keine der bekannten Lösungen bietet dazu einen in der Praxis wirksamen Ansatz.

Eine Variante des zuletzt diskutierten Ansatzes ist auch in CH 617 992 A5 beschrieben, nämlich dass die Zahnkranzsektoren verschiedener Größen auf einem gemeinsam radial angeordneten Bolzen gelagert und in die Flucht der Kette eingeschwenkt werden. Diese Lösung weist die Problematik des Verklemmens der Führungsbolzen nicht auf. Nachteilig ist jedoch der relativ hohe Platzbedarf, da die einzelnen Sektoren in einem, relativ großen Winkel ausgeschwenkt werden müssen, um vollständig aus dem Bereich der laufenden Kette zu gelangen. Zudem hat diese Lösung den Nachteil, dass die Kraft zum Gangwechsel durch Berührungen zwischen stehendem und drehendem Teil eingebracht wird. Dies führt neuerlich zur der bereits erwähnten Reibung und Geräuschentwicklung.

Dokument US 2002084618 A1 offenbart die Präambol des Anspruchs 1.

### Kurzbeschreibung der Erfindung

Es ist daher Aufgabe der Erfindung, ausgehend von dem Ansatz der Verwendung von sektorierten, geteilten und/oder unterbrochenen Zahnkränzen, die genannten Nachteile zu überwinden. Soweit möglich soll der Kontakt zwischen stehenden und drehenden Komponenten vermieden werden und zugleich eine betriebssichere und kompakte Bauweise ermöglicht werden.

Die Aufgabe wird durch eine Stellmechanik gemäß den Ansprüchen gelöst, wobei der hängige-Anspruch grundlegende Merkmale der Erfindung und die abhängigen Ansprüche vorteilhafte Weiterbildungen und Ausgestaltungen beschreiben. Die erfindungsgemäße Stellmechanik eignet sich besonders für eine Gangschaltung, bei der die Stellmechanik auf ein Getrieberad montiert ist, beispielsweise ein als Antriebsrad einer Fahrradschaltung dienendes Getrieberad. Die erfindungsgemäße Stellmechanik kann jedoch auch in einem Zwischengetriebe verwendet werden, das zwischen einer antreibenden Getriebegruppe und einer abtreibenden Getriebegruppe eines Fahrzeugs, insbesondere Fahrrads, zwischengeschaltet werden kann.

Im Besonderen wird die Aufgabe durch eine Stellmechanik der eingangs genannten Art gelöst, mit zumindest einer von einer Drehbewegung des Radsatzes entkoppelt gelagerten (somit stehenden) Stellkomponente und mit mehreren (mitdrehenden) Verschubelementen, wobei jedem Radktanzsektor ein Verschubelement zugeordnet ist und jeder Radkranzsektor über eine federnde Verbindung mit dem jeweils zugeordneten Verschubelement in Bezug auf die Drehung um die Radachse drehfest verbunden ist. Hierbei sind die Stellkomponenten dazu eingerichtet, die Verschubelemente über jeweils drehfreie Kopplungen in zumindest axialer Richtung jeweils zwischen einer ersten und einer zweiten Position zu veischieben, wobei die erste Position eines Verschubelementes der Lage eines zugehörenden Radkranzsektors außerhalb der Ebene des Zugmittels entspricht, wogegen ein in der zweiten Position befindliches Verschubelement auf den betreffenden Radkranzsektor - zumindest solange dieser sich außerhalb der Ebene des Zugmittels befindet - über die federnde Verbindung eine Kraft zum Verrücken des betreffenden Radkranzsektors in die Ebene des Zugmittels ausübt (und diesen so in die Ebene verstellt).

Diese erfindungsgemäße Lösung erbringt den stetigen, gelagerten Eingriff und die Vermeidung von wiederkehrenden Berührungen von rotierender und stehender Einheit in einem Getriebe der gegenständlichen Art. Sektorierte; geteilte oder unterbrochene An/Abtriebsräder oder zu Blöcken zusammengefasste Einheiten des Getriebes können auf einer Trägerplatte zur axialen Bewegung geführt oder zum Zweck des Einschwenkens um einen Drehpunkt oder mittels eines Federelementes gelagert sein. Nur beim Schaltvorgang selbst kommt es bei der zweitgenannten Form zu einem kurzen Kontakt zwischen fest stehender und rotierender Einheit. Die Erfindung umfasst auch verschiedene Aspekte zur Änderung von Übersetzungsverhältnissen, die untenstehend anhand von Ausführungsbeispielen erläutert werden.

Im Rahmen der Erfindung wird wie auf dem Gebiet der Zugmitteltriebe üblich unter einem "zugmittel" ein flexibles, auf Zug beanspruchtes Übertragungsmittel verstanden, das mehrere Wellen zum Übertragen einer Drehbewegung der Wellen-verbindet. Hierzu umschlingt das Zugmittel einen gewissen Winkelbereich zumindest eines antreibenden Rades und/oder zumindest eines abtreibenden Rades. Im Allgemeinen ist das Zugmittel bandförmig und im Regelfall endlos (üblicherweise in einer Schlaufe geschlossen); typischerweise ist das Zugmittel eine Kette, ein Riemen, ein Zahnriemen od.dgl., die bzw. der mit jeweils einem Radkranz des Radsatzes formschlüssig bzw. kraftschlüssig zusammenwirken kann.

Im Rahmen der Erfindung wird zudem unter einem "Radkranzsektor" eine Komponente eines An- oder Abtriebsrades verstanden, die lediglich einen Teil der Umfangsfläche aufweist, mit der das Zugmittel in kraft- oder formschlüssigen Kontakt tritt. Jedem Radkranzsektor kann somit ein Winkel um die Achse des Rades zugeordnet werden, der dem Ausmaß der Umschlingung durch das Zugmittel entspricht. Die Aufteilung eines Radkranzes in Radkrarizsektoren lässt insbesondere auch eine Lücke zwischen den einzelnen Sektoren zu, sofern dies für die jeweilige Ausführung sinnvoll, ist. Hierbei ist unerheblich, ob das Rad ein Zahnrad, Reibrad od.dgl. ist. Der Winkel eines Radkranzsektors ist im Allgemeinen kleiner als 180°, und typischerweise ist der Winkel gleich 360°/n (wobei n = 3, 4, 5, 6, ..., somit eine ganze Zahl ab 3 ist) oder geringfügig kleiner entsprechend der Lücke zwischen Sektoren.

Bei den im Rahmen der Erfindung betrachteten Getrieben wird zumeist nur entweder der antreibende oder der abtreibende Getriebeteil am Zugmittel betrachtet. Der jeweils andere Getriebeteil kann dann in einer geeigneten Weise nach einer aus dem Stand der Technik bekannten Art oder gemäß der Erfindung realisiert werden.

In einer vorteilhaften Weiterbildung der erfindungsgemäßen Stellmechanik sind die Verschubelemente jeweils durch eine federnde Verbindung mit den jeweils zugehörenden Radkranzsektoren und/oder der Stellkomponente verbunden. Diese Federverbindung gestattet ein Spiel in axialer Richtung. Dadurch wird ermöglicht, dass ein in der zweiten Position befindliches Verschubelement auf den betreffenden Radkranzsektor (zumindest solange dieser sich außerhalb der Ebene des Zugmittels befindet) die Kraft zum Verrücken des betreffenden Radkranzsektors in die Ebene des Zugmittels über die federnde Verbindung ausübt. Dies führt ein gewisses Spiel beim Verstellvorgang ein: insbesondere dann, wenn der betreffende Radkranzsektor sich gerade in einem Winkelbereich befindet, der einem von der Kette (oder dem Riemen) umschlungenen Bereich entspricht, ist ein sofortiges Einrücken in die Zugmittelebene nicht möglich; die federnde Verbindung gestattet ein verzögertes Einbringen des Sektors in die Ebene. Entsprechendes gilt umgekehrt, wenn ein Sektor wieder aus der Ebene hinaus verschoben wird, solange der betreffend Sektor (zumindest teilweise) umschlungen ist. Insgesamt wird durch die federnde Verbindung der Verstellvorgang erleichtert und eine Aktivierung der Stellmechanik unabhängig vom aktuellen Drehwinkel des Rades gestattet.

Um ein Ausweichen des Zugmittels aus der Seite, aus der die Radkranzsektoren in die Ebene des Zugmittels eingerückt werden, zu verhindern, ist eine Randplatte günstig; die parallel zur Fluchtebene verläuft. Diese kann vorteilhafter Weise mit dem Radsatz mitdrehend angebracht sein.

Um die Rückbewegung der Radkranzsektoren aus der Fluchtebene in ihre Ruheposition zu unterstützen, können zusätzliche, vorzugsweise als Blattfedern ausgeführte Federelemente vorteilhaft sein. Diese bewirken ein zuverlässiges Rückstellen der Radkranzsektoren in eine Ruheposition außerhalb der Fluchtebene, wenn das zugeordnete Verschubelement seine erste Position einnimmt.

Den Radkranzsektoren können Führungselemente zugeordnet sein, beispielsweise in Form von Führungsbolzen und/oder Kipphalterungen. Diese legen die im Wesentlichen axiale Bewegung der Radkranzsektoren aufgrund der Krafteinwirkung durch die jeweils zugeordneten Verschubelemente fest und sorgen somit für eine definierte Bahn der Radkranzsektoren beim Verrücken zwischen einer "aktiven Position" in der Fluchtebene und einer "Ruheposition" außerhalb der Fluchtebene. Insbesondere unterbinden diese Führungselemente eine unerwünschte Rotationsbewegung der Radkränze um die drehende Achse. Diese Führungselemente legen in der Regel ein Verrücken der Radkranzsektoren im Sinne eines seitlichen Verschiebens (d.h. in axialer Richtung) fest, eventuell mit einer geringen zusätzlichen radialen Komponente, wobei diese parallel zur Fluchtebene gehalten werden.

Jedoch können die Radkranzsektoren auch durch eine Kippbewegung verstellt werden. Solche gegenüber der Fluchtebene kippbare Radkranzsektoren können dann an der Welle (indirekt oder unmittelbar) mittels einer Feder befestigt sein, welche auf die Radkranzsektoren eine Kraft zur Bewegung aus der Fluchtebene ausübt.

Um ein schaltbares Festhalten in der "aktiven Position" zu erleichtern, können die Radkranzsektoren (zumindest in axialer Richtung) fest verbundene Führungsvorsprünge aufweisen, die in einen zugeordneten Führungssteg (der ringsektorartig entlang einer Umfangsrichtung verläuft) eingreifen, wenn der betreffende Radkranzsektor in der Fluchtebene liegt, wobei der Führungssteg von einer Drehbewegung des Radsatzes entkoppelt gelagert ist.

Entsprechend der Erfindung werden die Radblätter verschiedene Umfangsradien aufweisen, wobei jenes Radblatt, das den kleinsten Umfangsradius aufweist, vorzugsweise ungeteilt sein kann. In diesem Fall ist das kleinste, ungeteilte Radblatt günstiger Weise in axialer Richtung unbeweglich auf dem Radsatz montiert.

Entsprechend der Erfindung weist das ungeteilte Radblatt zumindest eine Öffnung aufweisen, insbesondere in seinem inneren Bereich innerhalb seines Kranzbereichs (Zahnkranzes). Durch diese Öffnung(en) kann zumindest ein Verschubelement und/oder zumindest ein diesem zugeordnetes Verbindungselement, das für die Verbindung des Verschubelements mit dem betreffenden Radkranzsektor sorgt, verlaufen. Dies entspricht einem "Durchgreifen" der Stellmechanik (bzw. genauer des Verschub- bzw. Verbindungselements) durch das kleinste Radblatt.

Gemäß einem anderen erfinderischen Aspekt können jeweils in einem gleichen Winkelbereich liegende Radsektoren in einem Sektorblock zusammengefasst sein, worin die jeweils zugehörenden Radsektoren vorzugsweise zueinander drehfest montiert sind, beispielsweise durch Nietung oder Verlötung. Insbesondere können die Radsektoren eines Sektorblocks starr verbunden oder sogar einstückig (z.B. ein einziges gefrästes Bauteil) sein. Die Radsektoren eines Blocks haben in der Regel nach außen entlang der Achsrichtung von einem Radsektor zum nächsten zunehmend kleinere Radien; in besonderen Fällen könnten auch zunehmend größere Radien vorgesehen sein. Es sei angemerkt, dass Sektorblöcke gemäß diesem und den nachfolgenden Aspekten der Erfindung in einer Stellmechanik für eine Gangschaltung auch unabhängig von dem Vorliegen einer Stellmechanik mit Stellkomponente(n) und mehreren (mitdrehenden) Verschubelementen der beschriebenen Art verwirklicht sein können.

Um eine Kapselung der Zahnsektoren zu erreichen, insbesondere im dem zuvor genannten Fall, dass die Radsektoren gleicher Winkelbereiche in Sektorblöcken zusammengefasst sind, kann ein Gehäuse vorgesehen sein. Das Gehäuse kann - vorzugsweise drehfest mit dem Radsatz der Radkranzsektoren - um die Radachse angeordnet sein und einen Hohlraum umgeben, der zumindest zum Teil seitlich der Fluchtebene liegt; in diesem Hohlraum können außerhalb der Fluchtebene befindliche Teile der Sektorblöcke - vorzugsweise in axialer Richtung - verfahren werden. Ein solches Gehäuse kann beispielsweise als nabenseitige Anschlussstelle für die Speichen bzw. Radscheibe eines um die Radachse drehbaren Rades dienen oder innerhalb eines Nabengehäuses angeordnet sein, an die die Speichen bzw. Radscheibe nabenseitig angeschlossen sind. Des Weiteren kann der Hohlraum in einen axialen Bereich hineinragen, welcher der axialen Position der Speichen bzw. Radscheibe entspricht.

In Kombination mit dieser Kapselung oder unabhängig von dieser kann man die von der Drehbewegung des Radsatzes entkoppelte(n) Stellkomponente(n) in einem längs der Radachse verlaufenden zentralen Hohlraum und längs der Radachse linear verstellbar untenbringen; hierbei kann günstiger Weise die drehfreie Kopplung durch in den zentralen Hohlraum hineinragende und in die Stellkomponente(n) eingreifende Vorsprünge der Verschubelemente realisiert sein.

Zufolge eines weiteren erfinderischen Aspekts können die Radkranzsektoren gegenüber der Fluchtebene mithilfe von Halteelementen kippbar sein, die selbst um einen kleinen Winkel schwenkbar gelagert sind. Diese Halteelemente können achsnah gelagert sein, nämlich um eine quer zur Radachse verlaufende Drehachse schwenkbarer Weise, und sich von dort nach außen erstrecken, wobei die Radkranzsektoren - unmittelbar oder gegebenenfalls über Trägerkomponenten - an äußeren Bereichen der Halteelemente angebracht sind.

Zudem können die Radkranzsektoren mit Federelementen ausgestattet sein, die für eine Endlagenfixierung sorgen. Hierbei bewirkt jedes Federelement ein Umschnappen des jeweils zugeordneten Radkranzsektors zwischen einer Lage in der Fluchtebene und einer Ruhelage außerhalb der Fluchtebene.

Noch ein Aspekt der Erfindung betrifft eine Stellmechanik mit einer Gangschaltung mit in Radkranzsektoren aufgeteilten Radsätzen bzw. Radblättern der eingangs genannten Art, wobei die Radkranzsektoren in axialer Richtung durch die Fluchtebene der Kette verfahrbar sind. Bevorzugter Weise sind dabei die Radkranzsektoren zu Sektorblöcken der bereits erwähnten Art zusammengefasst, und/oder sie können in einen Hohlraum, der von einem (z.B. an der Stelle einer Nabe befindlichen) Gehäuse gebildet wird, verfahren werden. Zudem können die Radkranzsektoren so angeordnet sein, dass sie bei der axialen Bewegung durch die Ebene verfahren werden, die der Ebene der Radspeichen entspricht. Dies erbringt eine besonders günstige Raumausnutzung und Platzersparnis in dem Rad, das mit der Gangschaltung dieser Art versehen ist. Im gekapselten Fall kann hierfür der Hohlraum in einen axialen Bereich hineinragen, welcher der axialen Position der Speichen bzw. Radscheibe entspricht. Es sei betont, dass auch dieser Aspekt einer Stellmechanik/Gangschaltung unabhängig von dem Vorliegen einer Stellmechanik mit Stellkomponente(n) und (mitdrehenden) Verschubelementen der bereits beschriebenen Art verwirklicht sein kann.

### Kurzbeschreibung der Zeichnungen

Die Erfindung samt weiteren Einzelheiten und Vorzügen wird nachfolgend anhand von bevorzugten, nicht einschränkenden Ausführungsbeispielen der Erfindung näher erläutert, die in den beigefügten Zeichnungen dargestellt sind. Diese zeigen:
- Fig. 1: einen Radsatz in perspektivischer Ansicht, mit sektorierten Radblättern nach dem Stand der Technik;
- Fig. 2: eine Stirnansicht eines Getriebes gemäß einem ersten Ausführungsbeispiel;
- Fig. 3: eine Rückansicht des Getriebes der Fig. 2 in teilweisem Schnitt gemäß Line A-A in Fig. 2;
- Fig. 4: das Getriebe der Fig. 2 und 3 mit geschaltetem zweiten Gang;
- Fig. 5: das Getriebe der Fig. 2 und 3 mit geschaltetem ersten Gang;
- Fig. 6: das Getriebe der Fig. 4, wobei ein dem zweiten Gang zugehörender Zahnkranzsektor noch nicht in die Flucht der Kette eingerückt ist;
- Fig. 7: das Getriebe der Fig. 5, wobei ein dem ersten Gang zugehörender Zahnkranzsektor noch nicht in die Flucht der Kette eingerückt ist;
- Fig. 8: das Getriebe eines zweiten Ausführungsbeispiels in einer Vorderansicht auf einem Fahrrad (das Fahrrad ist von der Seite gezeigt);
- Fig. 9: das Getriebe der Fig. 8 in einer Rückansicht;
- Fig. 10: eine Vorderansicht der Mechanik des Getriebes der Fig. 8 und 9;
- Fig.10A: eine Detailschnittansicht der Schaltnocke der Mechanik der Fig.10;
- Fig. 11: eine vereinfachte Stirnansicht der Mechanik zur Illustration des Umschaltens eines Gangs, wobei in Fig. 11 der Gang ausgeschaltet ist;
- Fig. 12: eine der Fig. 11 entsprechende Darstellung, jedoch mit eingeschaltetem Gang;
- Fig. 13: das Getriebe der Fig. 8 bis 10 als auf einem Fahrrad befindliche Schalteinheit in einer Stirnansicht von oben;
- Fig. 14: ein weiteres Ausführungsbeispiel einer Stellmechanik in einer Stirnansicht, wobei die Mechanik im Gang des innersten Zahnrads geschaltet ist;
- Fig. 15: die Stellmechanik der Fig. 14 im Gang des mittleren Zahnrads;
- Fig. 16: die Stellmechanik der Fig. 14 im Gang des äußersten Zahnrads;
- Fig. 17: eine Rückansicht des Getriebes mit der Mechanik der Fig. 14 bis 16;
- Fig. 18: noch ein Ausführungsbeispiel einer Stellmechanik, in dem die Sektoren durch eine Schablone ausgelöst werden;
- Fig. 19: die Stellmechanik der Fig. 18 mit eingeschaltetem Sektor;
- Fig. 20: ein weiteres Ausführungsbeispiel mit einer verschachtelten Halterung von Zahnsektorblöcken in einer Seitenansicht von außen;
- Fig. 21: eine Schnittansicht der Mechanik gemäß Linie A-A der Fig. 20;
- Fig. 22: ein weiteres Ausführungsbeispiel mit einer Halterung der Zahnsektoren an verkippbaren Trägern und Haltestiften, in einer Seitenansicht von außen;
- Fig. 23: einen der Träger des Ausführungsbeispiels der Fig. 22 in einer Seitenansicht;
- Fig. 23A bis 23C: weitere Ansichten des Trägers der Fig. 23, nämlich von rechts, von oben und von links;
- Fig. 24 bis 28: illustrieren die Arbeitsweise einer Endlagenfixierung;
- Fig. 29: ein anderes Ausführungsbeispiel in einer Stirnansicht in teilweisem Schnitt entlang einer Radialebene mit einer Schaltung über einen axial verschieblichen Zapfen,
- Fig. 30: eine Seitenansicht von innen der Mechanik der Fig. 29;
- Fig. 31: eine Schnitt-Aufsicht der Mechanik gemäß der Schnittlinie A-A der Fig. 29;
- Fig. 32: noch ein Ausführungsbeispiel einer Stellmechanik, worin Zahnsektorenblöcke axial verfahren werden und zudem in einem Gehäuse integriert sind, in einer Stirnansicht in teilweisem Schnitt;
- Fig. 33: eine Vorderansicht der Stellmechanik der Fig. 32; und
- Fig. 34: ein Getriebe in einer Vorderansicht auf einem Fahrrad, wobei eine erfindungsgemäße Gangschaltung in einem Zwischengetriebe angeordnet ist.

### Ausführliche Beschreibung von Ausführungsformen der Erfindung

Ein erster Aspekt der Erfindung vermeidet weitestgehend ein Berühren zwischen stehender und rotierender Einheit, nämlich dadurch, dass die Mechanik, die die Verschiebung der sektorierten, geteilten oder unterbrochenen Zahnkränze bewirkt, sich drehentkoppelt im immerwährenden Eingriff mit der drehenden Einheit befindet. Diese drehentkoppelte Schaltmechanik wird erfindungsgemäß dadurch ermöglicht, dass der stehende Teil der Mechanik zum drehenden Teil mittels Doppellagerung drehentkoppelt ausgeführt ist. Diese Art der Betätigung überwindet den Nachteil von bekannten Lösungen mit der immer wieder stattfindenden Berührung zwischen rotierenden und dem relativ dazu stehenden Teil.

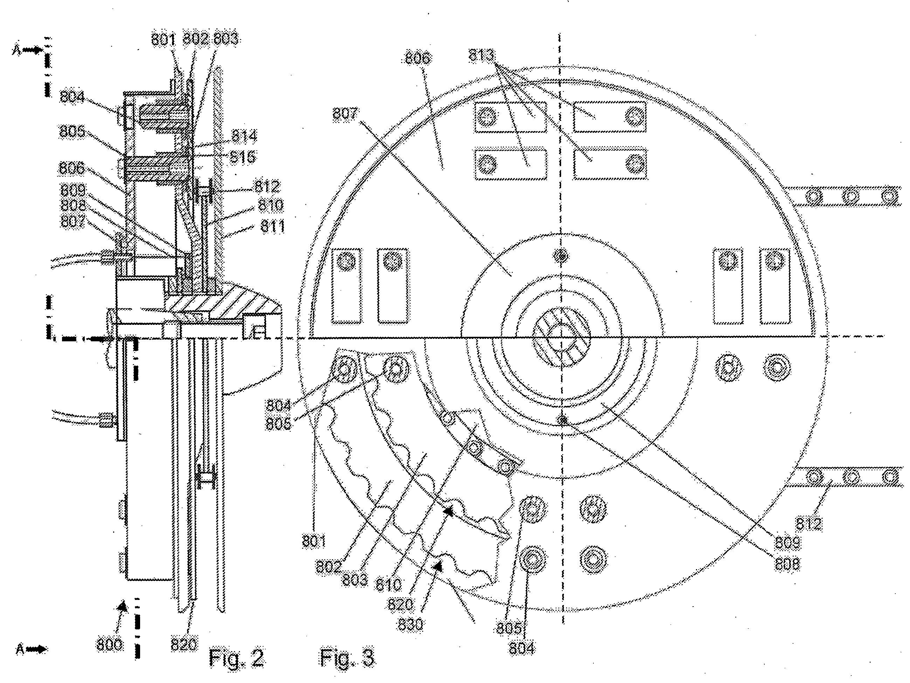

Dies wird im Folgenden anhand eines Beispiels erläutert, das in Fig. 2 bis 7 gezeigt ist und eine Ausführungsform eines vereinfachten erfindungsgemäßen Getriebes mit drei Gängen und der dazugehörigen Stellmechanik 800 zeigt.

Fig. 2 zeigt eine Stirnansicht des Getriebes, d.h. mit Blickrichtung senkrecht zu der Drehachse des Getriebes; der obere Teil ist als Schnittansicht gezeigt, wobei die Schnittebene durch die Drehachse verläuft. Hierbei liegt in Fig. 2 die (nach innen gewandte) Rückseite der Anordnung links. Fig. 3 zeigt eine Rückansicht des Getriebes, d.h. entlang der Drehachse des Getriebes von innen in teilweisem Schnitt (Line A-A in Fig. 2); außerdem ist im linken oberen Quadranten ein Bereich eröffnet dargestellt (Trägerplatte entfernt), sodass die Zahnsektoren sichtbar sind.

Auf einer Trägerplatte 801 sind drei Zahnradblätter, nämlich ein innerstes Zahnrad 810 sowie zwei zum innersten Rad konzentrische Zahnkränze 820, 830 vorgesehen. Ein erster und ein zweiter Gang werden durch die Zahnkränze 820 und 830 realisiert, während den dritten Gang das kleinste Rad 810 darstellt, das hier axial unbeweglich und ungeteilt ist. In Fig. 2 ist die Kette 812 auf dem Rad 810 laufend dargestellt. Nach außen dient eine Randscheibe 811 als Führungsscheibe zur Führung der Kette 811 und als Widerlager für auf die Kette ausgeübte axiale Kräfte.

Die Zahnkränze 820, 830 sind jeweils durch eine Anzahl Zahnsektoren realisiert, im gezeigten Beispiel je vier Viertelkreis-Zahnsektoren 802 bzw. 803. Die Zahnsektoren 802, 803 werden in dem dargestellten Ausführungsbeispiel mittels abgestufter Führungsbolzen 804, 805 geführt, wie nachfolgend näher beschrieben wird. Die Führungsbolzen 804, 805 können vorteilhafter Weise als mittels einer Dichtung 814 gegen Schmutz abgedichtete Bolzen ausgeführt sein, die mit einer Spielpassung in Führungshülsen 815, die in die Trägerplatte 801 eingepresst sind, geführt werden. Auf diese Weise kann eine hohe Kraft von der Führung übernommen werden.

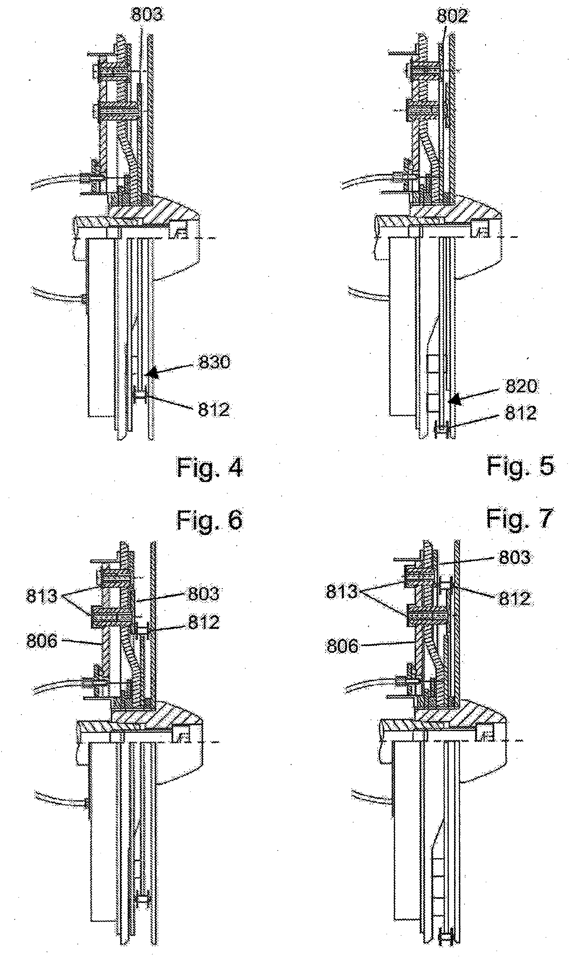

Eine Betätigungsplatte 806 ist parallel zur Trägerplatte axial beweglich angeordnet. Hierzu ist sie auf den Führungsbolzen 805 (nämlich auf den längeren Führungsbolzen) unter Zwischenschaltung von Blattfedern 813 gelagert. Die den Führungsbolzen 804, 805 zugeordneten Blattfedern 813 sind in der Rückansicht der Fig. 3 erkennbar. Über der Betätigungsplatte ist ein gelagerter, drehentkoppelter Schaltring 807 angeordnet; ein dort durchgeführtes Zugseil 808 ist an der ebenfalls gelagerten Ankerplatte 809 fixiert. Mittels des Schaltringes 807 kann über das Zugseil 808, wenn dieses gespannt wird und somit eine Näherrücken des Schaltringes 807 zur Ankerplatte 809 hin bewirkt, eine Kraft eingebracht werden, die dazu führt, dass das die Betätigungsplatte 806 die Führungsbolzen 804, 805 und somit die Zahnsektoren 802, 803 in die Flucht der Kette führt. Der Schaltring wirkt somit als Stellkomponente zur Betätigung der Mechanik und die Führungsbolzen als den Zahnsektoren zugeordnete Verschubelemente. Dies geschieht in der dargestellten bevorzugten Drei-Gang-Ausführung in zwei Schritten, wie in Fig. 4 bis 7 (jeweils Stirnansichten nach Art der Fig. 2) dargestellt ist.

Fig. 4 zeigt das Getriebe in einem Zustand, in dem der zweite Gang geschaltet ist. Darin werden die Zahnsektoren 803 des mittleren Zahnkranzes 830 (d.i. der kleinere der beiden sektorierten Zahnkränze) axial im nicht umschlungenen Bereich der Kette 812 zugeführt.

Fig. 5 zeigt das Getriebe in einem Zustand, in dem der erste Gang geschaltet ist. Darin werden die Zahnsektoren 802 des großen sektorierten Zahnkranzes 820 axial im nicht umschlungenen Bereich der Kette 812 zugeführt.

Fig. 6 zeigt einen Zustand der Zahnsektoren 803, worin diese auf Grund der Tatsache, dass diese im umschlungenen Bereich der Kette geschaltet werden, nicht in die Flucht der Kette fahren können. Ein solcher Zustand tritt regelmäßig beim Wechsel zwischen Gängen übergangsweise auf. Hier kollidiert der Zahnsektor 803 mit der Kette 812. Da die Betätigungsplatte 806 zwingend axial verfahren wird, öffnen die Blattfedern 813 der Führungsbolzen 805. Die Blattfedern 813 dienen so als Kraft- und Wegbegrenzung. Der Zahnsektor 803 bleibt somit zwangsläufig stehen und fährt erst dann in die Flucht der Kette aus, wenn es in den nicht umschlungenen Bereich der Kette kommt und somit freigegeben wird. Wenn in einer alternativen Betrachtungsweise man den rotierenden Teil als Bezugssystem betrachtet, bewegt sich die Kette vom kleineren Zahnkranzsektor weg und gibt dadurch den Weg für das Verfahren des Zahnsektors in die Flucht der Kette frei.

Fig. 7 zeigt die Kollision der großen Zahnkranzsektoren 802 mit der Kette 812. Für die Freigabe gilt analog das oben anhand Fig. 6 für die Zahnkranzsektoren 803 Diskutierte, wobei in diesem Fall die Blattfedern 813 der Führungsbolzen 804 öffnen.

Der Vorteil bei der vorstehend diskutierten Lösung ist, dass auch beim Schaltvorgang selbst keine Berührung der bewegten Teile (Kette 812, Zahnräder 810, 820, 830) mit dem eigentlichen die axiale Verschiebung bewirkenden Schaltmechanismus stattfindet. Dadurch wird die Reibung und Geräuschentwicklung minimiert. Ein weiterer Vorteil ist, dass ein gut gegen Schmutzeindringen geschlossenes System realisiert werden kann, das die Schaltmechanik umgibt. Dies gewährleistet die Funktion der beschriebenen Mechanik auch bei starker Schmutzeinwirkung.

Als weiterer Vorteil ergibt sich, dass selbst bei sehr starken Erschütterungen keine ungewünschten Bewegungen der einzelnen Sektoren 802, 803 stattfinden können, da diese durch eine Feder 813 und die Betätigungsplatte 806 fixiert sind.

Durch das Fehlen einer feststehenden Einheit, die bei anderen Systemen die Mechanik der Schaltung trägt, ist außerdem eine bessere Standardisierung möglich. Der Platzbedarf und das Gewicht einer solch ausgeführten Mechanik sind geringer als jene bei herkömmlich bekannten Systemen.

Ein weiterer Aspekt der Erfindung betrifft eine Lösung, um auf einem Bolzen (wie die Führungsbolzen 804, 805 der Fig. 3) verbindenden Steg eine Kraft zentral einzubringen und so eine fixierte Position der sektorierten, geteilten oder unterbrochenen Zahnkränze zu bewerkstelligen. Die Bewegung der Sektoren erfolgt durch an der rotierenden Einheit befindliche Schaltnocken mit Rastfunktion, die im Schaltpunkt durch eine einmalige kurze Berührung mit einem relativ zur bewegten Schalteinheit fest stehenden Schlitten ausgelöst werden.

Dieses Prinzip der Ansteuerung wird nachstehend in Fig. 8 bis 13 anhand eines dort gezeigten Ausführungsbeispiels illustriert, bei dem die Anordnung drei schaltbare Übersetzungsverhältnisse verwirklicht.

Das in Fig. 8 gezeigte Kettengetriebe 200 dieses Ausführungsbeispiels befindet sich auf der Welle einer Tretkurbel 201 eines Fahrrades. Drei schaltbare Übersetzungsverhältnisse werden durch das Ändern der Kettenlage zwischen einem kleinen fest auf der Kurbelwelle montierten Zahnkranz 202 sowie durch zwei weitere durch je drei Teile 203, 204 sektorierte Zahnkränze 220 und 230 erreicht. Zur Sicherung der axialen Lage der Kette nach außen hin ist eine Führungsscheibe 205 vorgesehen. Der nicht von der Kette 206 umschlungene Bereich (angedeutet durch den Doppelpfeilbogen A) kann durch zumindest eine Führungsrolle 207, die die Kette nach z.B. unten auslenkt, zusätzlich vergrößert werden.

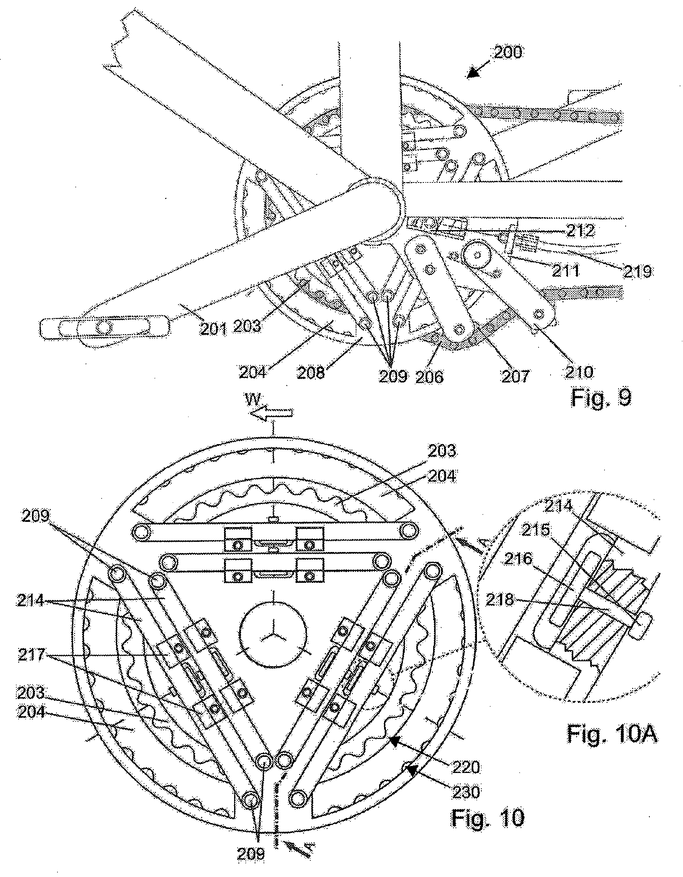

Fig. 9 zeigt eine Rückansicht des am Fahrrad montierten Kettengetriebes 200. Auf der Trägerplatte 208 sind die Zahnsektoren 203 und 204 mittels je einem Paar Bolzen 209 axial geführt. Ebenfalls ersichtlich sind ein Kettenspanner 210, die Halteplatte 211 des Schaltschlittens 212 mit diesem zugeordneten Bowdenzug 219. In Fig. 8 und 9 ist die Kette auf dem Kettenblatt 220 des mittleren Ganges geschlungen dargestellt.

Fig. 10 zeigt die Mechanik zur Änderung des Übersetzungsverhältnisses für den Radsatz der Fig. 9 und 8; die Drehrichtung des Radsatzes (bei Vorwärtslauf) ist gegen den Uhrzeigersinn in Fig. 10 (Pfeil W). Je zwei Führungsbolzen 209 sind je Zahnsektor 203, 204 vorgesehen und durch je einen Steg 214 verbunden. Im Mittelbereich jedes Steges befindet sich eine Schaltnocke 215 und ein Aufrichter 216. Auf jedem der (in diesem Fall sechs) Stege 214 sitzen je zwei Blattfedern 217, die den Steg in Richtung Trägerplatte 208 niederhalten. Auf diese Weise wird der zugehörende Verbund von Zahnsektor, Bolzen und Steg in die Flucht der Kette gedrückt. Wenn der betreffende Gang nicht geschaltet ist, wird die Bewegung in die Flucht der Kette durch die aufgestellte Schaltnocke verhindert. Diese Anordnung der Bauteile gilt gleichartig für alle Zahnsektoren 203, 204.

In Fig. 10A ist eine vergrößerte Detailansicht in teilweiser Schnittansicht zur Darstellung der Schaltnocke 215 und des Aufrichters 216 gezeigt, die durch eine gemeinsame Achse 218 fest miteinander verbunden im Steg 214 geführt sind. Eine Ausnehmung in der Trägerplatte 208 ermöglicht das Weiterdrehen des Aufrichters 216, da letzterer sonst auf Grund seiner Länge mit der Trägerplatte kollidieren würde.

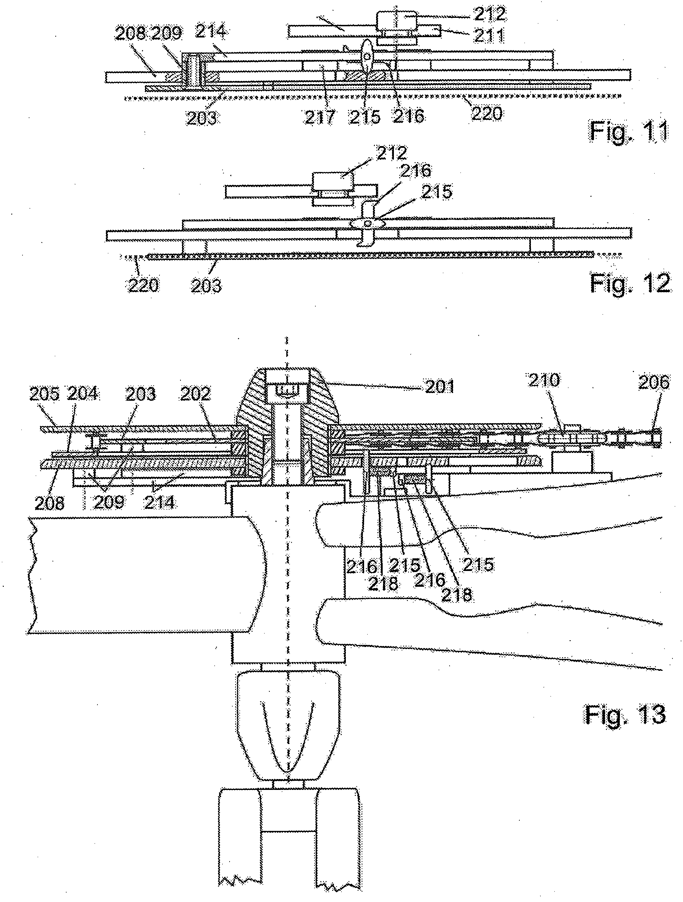

Fig. 11 und 12 illustrieren das Umschalten des Gangs in Form vereinfachter Stirnansichten (entsprechend Stirnansichten entlang der Linie A-A der Fig. 10), in denen der Deutlichkeit halber nur ein Zahnsektor 203, Steg 214, Schaltnocke 215 und Aufrichter 216, sowie der fest stehende Schaltschlitten 212 in dessen Trägerplatte 211 gezeigt ist. Der Pfeil W gibt die Bewegungsrichtung der rotierenden Einheit an. In Fig. 11 befindet sich der Zahnsektor 203 in eingefahrener Stellung, also außerhalb der Flucht der Kette (durch die unterbrochene Linie 220 symbolisiert). Der Gang ist somit nicht geschaltet. Die Schaltnocke 215 steht. Fig. 12 zeigt den geschalteten Gang. Die Schaltnocke 215 wurde dadurch, dass der Schaltschlitten 212 vorbeigefahren ist, umgestoßen. Durch das Umstoßen der Schaltnocke 215 wird der Aufrichter 216 aufgestellt, wodurch der Zahnsektor in die Flucht 220 der Kette geschoben wird. Wenn der Schaltschlitten 212 wieder zurück gefahren wird, wird dieser durch Kontakt mit dem Aufrichter 216 die auf der selben Welle befindliche Schaltnocke 215 wieder aufstellen, wodurch der Zahnkranzsektor zurück aus der Flucht der Kette bewegt wird.

Durch diese zentrale Krafteinbringung durch die Schaltnocke 215, die zur Bewegung des Sektors dient, lässt sich ein Verkanten der Führungsbolzen verhindern. Die Federkraft der Blattfedern 217 bewirkt die Rückstellung der Zahnsektoren in die Ausgangsposition bei umgelegten Schaltnocken. Die Blattfedern 217 halten hierbei den Steg 14 nieder; wenn die Schaltnocke 215 aktiviert wird, stellt diese den Steg gegen die Kraft der Federn 217 auf.

Durch den Einsatz von Schaltnocken mit Einrastfunktion wird gewährleistet, dass zwischen der drehenden Einheit und dem fix stehenden Schlitten nur eine einmalige Berührung zum eigentlichen Schaltzeitpunkt entsteht, nämlich bei Berührung des Schaltschlittens 212 mit der Schaltnocke 215 bzw. dem Aufrichter 216. Dadurch gibt es kein Betriebsgeräusch durch schleifende Teile. Außerdem befinden sich die Zahnsektoren immer in einer fixierten Zwangslage.

Fig. 13 zeigt die oben beschriebene bevorzugte Anordnung als auf einem Fahrrad befindliche Schalteinheit in einer Stirnansicht von oben. Gezeigt ist auch die Kurbel 201 und ein Teil des Pedals auf der linken Seite (in Fig. 13 unten) des Rades; die rechte Seite der Kurbel ist der Einfachheit halber nicht dargestellt.

Ein dritter Aspekt der Erfindung betrifft die Führung der Radsektoren durch Schaltrollen, nämlich zumindest im nicht umschlungenen Bereich der Kette (bzw. des kraftübertragenden Mediums). Insbesondere können die Sektoren/Komponenten der An/Abtriebsräder im nicht umschlungenen Bereich der Kette (bzw. des Riemens) durch stetig in Berührung befindliche Schalt- oder Führungsrollen gehalten werden.

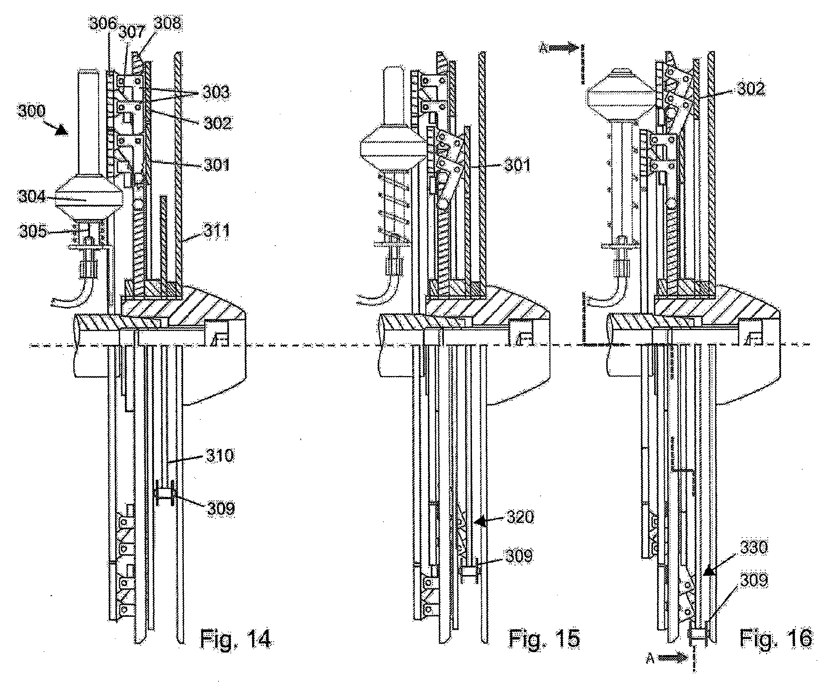

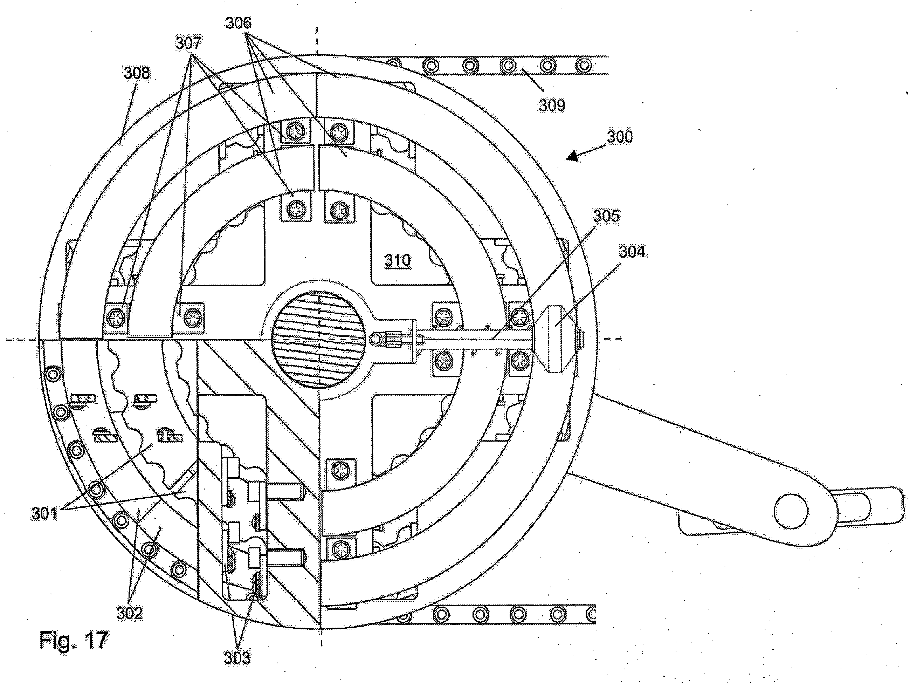

Dieses Prinzip der Führung wird nachstehend anhand eines weiteren, in Fig. 14 bis 17 gezeigten Ausführungsbeispiels einer erfindungsgemäßen Stellmechanik 300 illustriert. Fig. 14 bis 16 zeigen Stirnansichten mit jeweils verschiedenem geschalteten Gang; Fig. 17 zeigt eine Rückansicht in teilweiser Schnittansicht entsprechend der Linie A-A in Fig. 16. Bei dieser Ausführungsform sind Zahnsektoren 301 und 302 gelenkig oder flexibel auf jeweils vier Kipphebeln 303 befestigt, die jeweils um einen Drehpunkt an der Trägerplatte 308 gelagert sind. Diese Kipphebel 303 realisieren eine Kipphalterung der zugeordneten Zahnsektoren, die eine Parallelführung der Zahnsektoren in axialer Richtung ermöglicht. Fig. 15 zeigt eine Stellung mit in die Flucht der Kette gebrachten Zahnsektoren 301 des mittleren Zahnkranzes 320, während in Fig. 16 die Sektoren 302 des großen Zahnkranzes 330 aktiviert sind. In Fig. 14 sind alle Zahnkränze aus der Flucht der Kette 309, sodass diese auf dem innersten Zahnrad 310 läuft. Wie ersichtlich ist, werden die Zahnkranzsektoren 301, 302 durch eine innerhalb der Radanordnung montierte Führungsrolle 304 über Führungsschienen 306 zwingend verschoben. Diese Führungsrolle 304 bewegt sich auf einer stehenden (d.h. nicht drehenden) in radialer Richtung verlaufenden Achse und kann mittel eines Bowdenzugs 305 relativ zum Mittelpunkt der rotierenden Einheit verschoben, werden.

Je nach Position der Führungsrolle 304 (Stellkomponente) wird über die jeweils betätigte Führungsschiene 306 (Verschubelement) ein entsprechender Zahnkranzsektor in die Flucht der Kette gerückt. Auch hier ist eine Randscheibe 311 vorgesehen, die als Führung, und Begrenzung für die Kette 309 dient.

Es können auch mehrere Führungsräder vorgesehen sein, und je nach Zahl der Sektoren in einem Zahnkranz kann die Zahl der Führungsräder variieren. Hierbei ist es nicht erforderlich, Führungsräder für jene Sektorbereiche vorzusehen, die von der Kette umschlungen sind, da in diesen Bereichen die beteiligten Zahnkranzsektoren durch die Kette selbst in Position gehalten werden. Deshalb ist in der Ausführungsform der Fig. 13 bis 17 nur eine Führungsrolle notwendig, denn diese reicht aus zur Positionierung der Sektoren im nicht umschlungenen Bereich. Befinden sich die Zahnkranzsektoren durch die Drehbewegung bedingt außerhalb der Führung durch die Führungsrolle, so werden sie durch die Kette selbst in Position gehalten. Die selbsthaltende Funktion entsteht hier dadurch, dass die Zahnsektoren neben der axialen Verschiebung auch in Richtung Mittelpunkt verschoben werden um in die Flucht der Kette zu gelangen; dies ist eine Konsequenz der seitlichen Kippbewegung der Kipphebel 303. Ein selbsttätiges Rückstellen der Zahnkranzsektoren 301, 302 wird so durch die Kette selbst verhindert, da diese das Ausfahren der Zahnsektoren vom Mittelpunkt weg auf Grund der Umschlingung nicht zulässt.

Die Rückstellung der Sektoren erfolgt durch den Zahnkranzsektoren 301, 302 zugeordnete Blattfedern 307. Für jeden Zahnkranzsektor sind beispielsweise jeweils zwei Blattfedern 307 vorgesehen, die sich zwischen Trägerplatte 308 und Führungsschienen 306 befindet.

Der Vorteil dieser Ausführungsform der Mechanik zum Gangwechsel liegt in ihrer konstruktiven Einfachheit. Die einzelnen Sektoren müssen im nicht umschlungenen Bereich der Kette mechanisch weder verriegelt oder gehalten werden, wodurch die Mechanik der Betätigung an sich einfacher ausfällt. Die Lösung der auf einer Achse verfahrbaren Schaltrolle stellt eine konstruktiv sehr einfacher und somit wirtschaftliche Lösung dar.

Als weiterer Vorteil ergibt sich bei diesem Aspekt der Erfindung, dass das System weniger anfällig gegen Verschmutzung ist, da die Zahnsektoren nicht auf Bolzen geführt, sondern von um einen Drehpunkt gekippten Komponenten verschoben werden. Gleitende Bolzen neigen infolge von zwischen die Gleitflächen gelangenden Schmutz dazu, schwergängig zu werden. Generell kann gesagt werden, dass die Führung der Zahnsektoren gemäß dieser Ausführungsform das Verklemmen der einzelnen Sektoren verhindert. Ein weitere Vorteil dieser Ausführung ist, dass die Sektoren parallel der Flucht der Kette zu- und abgeführt werden, was den Platzbedarf zusätzlich verringert.

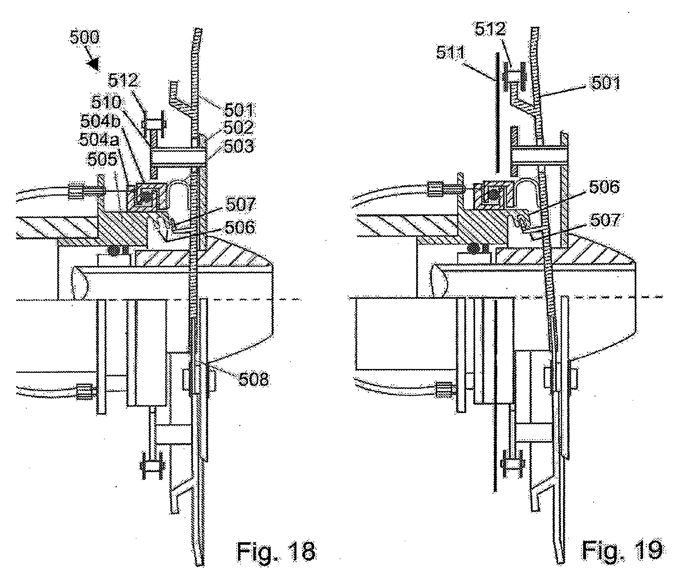

Ein weiterer Aspekt der Erfindung ermöglicht ein rasches Auslösen durch eine Schablone. Dies ist in Fig. 18 und 19 illustriert, die Stirnansichten eines Ausführungsbeispiels einer Schaltung 500 mit zwei Gängen zeigen, wobei in Fig. 18 der eine Gang mit einem axial festen, kleinen Zahnkranz 510 geschaltet ist und in Fig. 19 der weitere Gang mit einem Zahnkranz 520 aus mehreren Sektoren 501. Bei dieser Ausführungsform werden alle Sektoren 501 gleichzeitig über eine drehentkoppelte Mechanik ge- bzw. entspannt, die aus einem festen Ring 504a und einem mit den Sektoren 501 mitdrehenden Teil 504b gebildet ist; hierbei entspricht der Ring 504a der Stellkomponente und der Teil 504b einem Verschubelement im Sinne der Erfindung. Der über die Mitte ausgeführte Sektorblock 501 ist mittels einer Blattfeder 508 an der Trägerplatte 502 befestigt. Die Bewegung der Sektorblöcke 501 wird jedoch durch eine Schablone 505 verhindert, die ringförmige Stege 506 aufweist, an der sich Führungsvorsprünge in Form von vorspringenden Füße 507 der Sektoren 501 abstützen. Dies geschieht bis zu einem Schaltpunkt, da an einer Stelle der Schablone 505 die Stege 506 unterbrochen sind. Im Schaltpunkt selbst ist der jeweils betroffene Sektor in axialer Richtung freigegeben, und es erfolgt dann ein rasches Umspringen des durch die Feder 503 vorgespannten Sektorblocks 501. Die Blattfeder 508 drückt den Sektor 501 zur in Fig. 18 dargestellten Ausgangssituation hin; durch die Einbringung der Schaltkraft durch den drehentkoppelten Bowdenzug 504 wird der Sektorblock stufenweise ausgelenkt und die Sektoren in die Flucht der Kette 512 zugeführt. Die Darstellung der Stellung im Gang mit eingeschaltetem Sektor 501 ist in Fig. 19 dargestellt. Zusätzlich kann eine Führungsscheibe 511 vorgesehen sein, die - in dieser Ausführungsform beispielsweise zur Rückseite hin - ein mögliches Ausweichen der Kette 512 zur von den Sektoren 501 abgewandten Seite hin begrenzt.

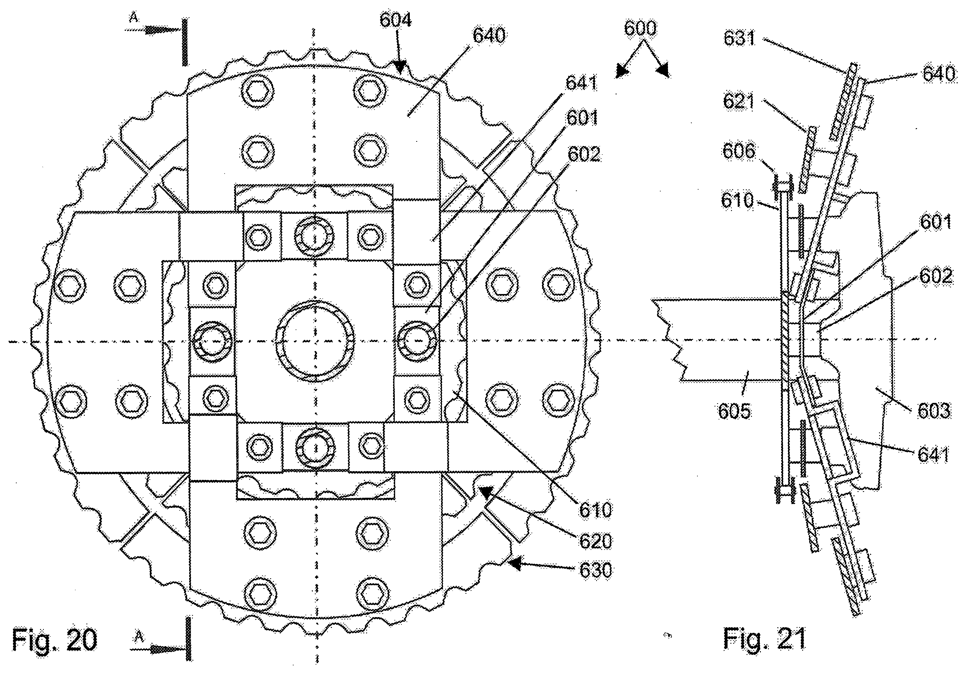

Fig. 20 zeigt eine weitere Ausführungsform 600 zu diesem Aspekt der Erfindung in einer Seitenansicht. Darin sind in einer überlappenden Trägeranordnung 604 die Sektoren des mittleren Zahnkranzes 620 und des großen Zahnkranzes 630 auf einer Trägerplatte 640 auf einer gemeinsamen Blattfeder 601 befestigt, beispielsweise verschraubt, und bilden so wiederum Sektorblöcke. Diese Blattfeder 601 ist wiederum, um die Teilevielfalt gering zu halten, am Bolzen 602 des kleinsten, ungeteilten Zahnkranzes 610 montiert.

Fig. 21 zeigt eine Schnittansicht der Ausführungsform der Fig. 20 längs der Linie A-A. Erkennbar ist, wie die Sektoren 621, 631 der Zahnkränze 620, 630 in verschiedenen Winkeln gegenüber der Trägerplatte 640 auf dieser befestigt sind. Erkennbar ist auch die Welle 605 und das Ansatzstück 603 der Kurbel (die in Fig. 20 der Deutlichkeit halber nicht gezeigt sind) sowie die Kette 606.

Durch die in sich verschachtelte Anordnung 604 der Trägerplatten 640, die hierfür jeweils eine Brücke oder Ausformung 641 (Ausbuchtung) aufweisen, ist es möglich, die Zahnsektoren sehr weit außen am Durchmesser zu lagern. Dies wiederum verbessert die Steifigkeit des Systems. Ebenfalls wird durch diese konstruktive Maßnahme der Raum innerhalb des kleinsten Zahnkranzes freigehalten, um eine Schaltmechanik realisieren zu können, die durch den kleinsten Zahnkranz durchgreifend angeordnet ist. Eine solche durchgreifende Schaltmechanik wurde oben anhand der Fig. 18 und 19 beschrieben.

Ein besonderer Vorzug dieser Ausgestaltung liegt in der Lagerung der Zahnkranzsektoren mittels federnder Elemente. Wie ersichtlich ist, sind die zu einem Block zusammengefassten Sektoren mithilfe der Blattfedern 601 flexibel gelagert, sodass sie nach Bedarf in die Flucht der Kette und wieder aus dieser hinaus bewegt werden können. Durch diese Lösung der Lagerung wird das System weitgehend schmutzunempfindlich. Außerdem ergibt sich eine vereinfachte Konstruktion, da die Rückstellkraft bei einseitiger Betätigung ebenfalls durch das Federelement bereits bereitgestellt wird, was eine Rückstellfeder erübrigt.

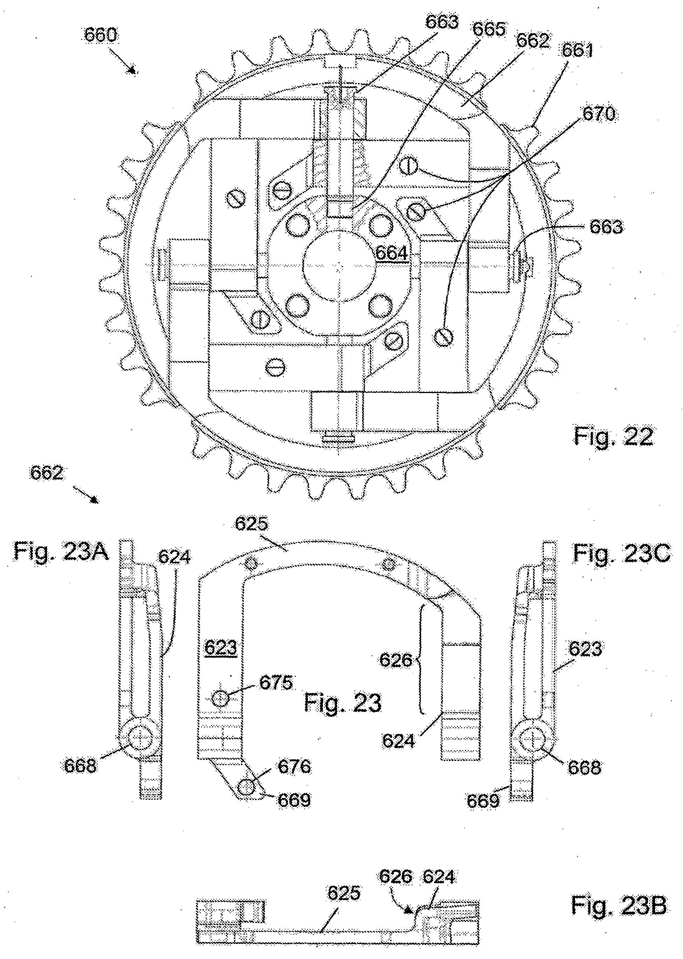

Eine Abwandlung dieses Aspekts ist in Fig. 22 illustriert. In diesem Ausführungsbeispiel 660 sind die Zahnsektoren des großen Zahnkranzes 661 (die kleineren Zahnkränze sind hier der Deutlichkeit halber nicht gezeigt) auf Trägern 662 angebracht, die an Armen oder Haltestiften 663 gehalten sind, die entlang der Achsrichtung verkippt werden können. Die Darstellung in Fig. 22 zeigt den oberen der Haltstifte 663 im Schnitt; ansonsten ist Fig. 22 eine Seitenansicht von außen. Die Haltestifte 663 verlaufen im Wesentlichen radial, wobei der Winkel gegenüber der Achse in einem gewissen Ausmaß verstellbar ist und somit unmittelbar - je nach Winkel - eine Verkippung der zugeordneten Zahnsektoren des Zahnkranzes 661 gegenüber der Achse ergibt. Hierzu sind die Haltestifte 663 achsnah, z.B. an einem achsnahen Montagering 664, derart befestigt, dass sie hinsichtlich ihres Winkels zur Achse schwenkbar sind, ähnlich den Speichen eines Regenschirmes. Vorzugsweise ist das innere Ende jedes Armes/Haltestiftes 663 mittels eines in Umfangsrichtung des Ringes 664 verlaufenden Bolzens 665 befestigt und um diesen drehbar gelagert (der Bolzen definiert somit die Drehachse der Schwenkbewegung). Die Träger 662 sind wie nachstehend beschrieben an den Armen 663 angebracht.

In Fig. 23, 23A, 23B und 23C ist der U-förmige Träger 662 in mehreren Ansichten ersichtlich. Der Träger 662 hat zwei Schenkelteile 623, 624, die durch einen bogenförmigen Außenteil 625 verbunden sind. Im Endbereich der beiden Schenkel 623, 624 ist je eine Bohrung 668 gebildet, durch die je ein Arm/Haltestift 663 geführt werden kann. Der in Fig. 23 rechte Schenkel 624 realisiert hierbei eine Brücke oder Ausformung 626 (Ausbuchtung; siehe auch Fig. 23A). Der in Fig. 23 linke Schenkel weist außerdem einen Vorsprung 669 auf, der den Träger über die Verbindungslinie der Bohrungen 668 hinaus (in Fig. 23, 23C nach unterhalb) verlängert. Unter Verwendung der Bohrungen 668 ist jeder Träger 662 an je zwei einander gegenüber liegenden Armen 663 befestigt. In der Mechanik sind mehrere Träger 662 wie in Fig. 22 gezeigt rosettenartig um die Drehachse angeordnet, unter Ausnutzung der Ausformungen 626 der Trägerschenkel 624. Die Befestigung kann wie gezeigt in den Bohrungen 668 gelenkig oder in einer Variante elastisch verformbar sein, um die geringfügige Verkippung der Träger 662 gegenüber der zur Drehachse senkrechten Ebene - gegebenenfalls in Kombination mit einer geringen Ausgleichsbewegung entlang der Längsrichtung der Haltestifte - zu ermöglichen. In der gezeigten Ausführungsform haben somit je zwei gegenüber liegende Träger 662 je einen Arm/Haltestift 663 gemeinsam. Dies trägt zur Verringerung der Teilevielfalt bei. In einer Variante können die Träger 662 selbstverständlich auch auf jeweils einem eigenen Arm oder Haltestift pro Arm gehalten sein.

Hierbei ergibt sich der Vorteil, dass infolge der großen Länge der Arme, gemessen in Bezug auf den Mittelpunkt (d.i. der Durchstoßpunkt der Achse durch die Ebene des Zahnkranzes 661 im aufgespannten Zustand), die Zahnsektoren nur eine sehr kleine Winkelbewegung durchlaufen müssen, um aus der Flucht der Kette völlig hinaus in einen nicht von der Kette umschlungenen Bereich zu gelangen.

Im Übrigen entspricht das Ausführungsbeispiel 660 jenem, das oben anhand Fig. 20 und 21 erläutert worden ist. Die Positionen 670 zeigen hierbei die Stellen am, wo die Stellkomponenten und Verschubelemente im Sinne der Erfindung, z.B. nach Art der Elemente 503-505, angebracht sind, um ein Verstellen der Träger 662 bzw. des Zahnkranzes 661 zu betätigen. Hierbei ist auf jedem Träger je eine Position 670 auf verschiedenen Seiten der Kippachse positioniert, in dem Beispiel der Fig. 23 z.B. eine 675 auf dem Schenkel 623 sowie gegenüber dazu eine 676 auf dem Vorsprung 669. Die Aufteilungszahl der Zahnkränze, hier z.B. je vier Zahnsektoren, kann auch hier natürlich variieren und ist nicht auf vier eingeschränkt.

Ein weiterer Aspekt der Erfindung betrifft die Endlagenfixierung von Radkranzsektoren mithilfe eines federnden Elements. Hierbei wird ein Rad- oder Zahnkranzsektor durch Federkraft über den Totpunkt zwischen den beiden Endpositionen bewegt, wobei eine Endposition die Position in der Fluchtebene der Kette (des Riemens od.dgl) ist, die andere Position eine Ruheposition außerhalb der Fluchtebene.

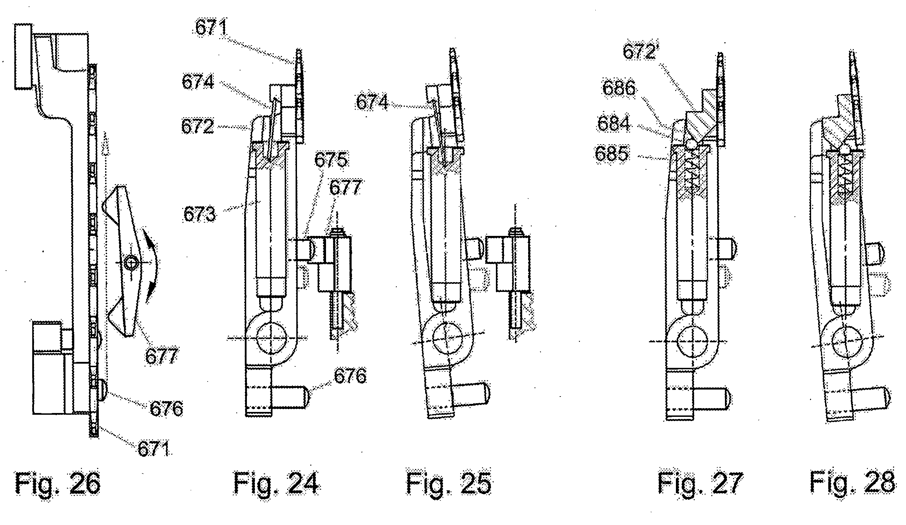

Die in Fig. 24 und 25 gegebenen Stirnansichten illustrieren ein erstes Ausführungsbeispiel der Endlagenfixierung, das auf dem Ausführungsbeispiel der Fig. 22 aufbaut. Hierbei entsprechen der Zahnkranzsektor 671, der Träger 672 und der Stift 673 jeweils den Bauteilen 661, 662, 663 der Fig. 22; abweichend von jener Ausführung ist die Verbindung zwischen dem Träger 672 und dem Stift 673 mithilfe eines elastischen Verbindungsstiftes 674 realisiert, der ein Spiel in axialer Richtung zwischen dem Träger 672 und dem Stift 673 realisiert. Der Verbindungsstift 672 ist einerseits am äußeren Ende des Stifts 673 und andererseits an einer Befestigungsstelle (z.B. einer Nase) des Trägers 672 in der Verlängerungslinie des Stiftes 673 eingespannt/befestigt. Der Verbindungsstift 674 hat eine geringe Überlänge, weshalb er der Mittelposition ausweicht und den Träger 672 - und somit den darauf gehaltenen Zahnkranzsektor 671 - bis zum Anschlag dringt; hierbei wird diese Bewegung durch eine geringe elastische Verformung des Außenteils 625 des Trägers 662 und/oder des Verbindungsstiftes 674 ermöglicht. Dies definiert die beiden Endpositionen, die jeweils in Fig. 24 und 25 gezeigt sind und zwischen denen der Sektor 671 je nach Betätigung hin und her schnappen kann.

Die Betätigung kann beispielsweise mithilfe von Vorsprüngen 675, 676 erfolgen, die auf den Trägern 672 in verschiedenem Radialabstand zur Radachse angebracht sind (insbesondere an den Anbringungspunkten 670 in Fig. 22) und als z.B. Bolzen realisiert sein können. Die Vorsprünge wirken als Verschubelemente im Sinne der Erfindung und ragen durch das Zahnrad des kleinsten Zahnkranzes (in Fig. 24-28 nicht gezeigt) hindurch. Im Laufe einer Drehung werden die Vorsprünge 675, 676 an einem Wippen-artigen Schalthebel 677 ("Schaltwippe") vorbei bewegt, der ist drehfest positioniert ist. Die Schaltwippe 677 in Fig. 26 in einer Sicht von oben erkennbar. Die Schaltwippe 677 ist zwischen zwei Positionen bewegbar, wie dies in Fig. 26 durch den Doppelpfeil angezeigt ist. In einer ersten Position befindet sich der eine Arm der Schaltwippe 677 in dem Bewegungsbereich der ersten Vorsprünge 675 (und ist außer Eingriff der zweiten Vorsprünge 676), weshalb die Schaltwippe 677 auf diese drückt und somit den Träger 672 aus der Position der Fig. 24 in jene der Fig. 25 bewegt. Somit erfolgt ein Umschalten in die Stellung des Sektors außerhalb der Kettenfluchtebene. Wenn dagegen der Hebel in der zweiten Position ist, befindet er sich außer Eingriff mit den ersten Vorsprüngen, wirkt jedoch auf die zweiten Vorsprünge 676; da diese auf den Trägern 672 gegenüber den ersten Vorsprüngen angeordnet sind, ergibt sich eine Kraftwirkung, die den Träger 672 wieder in die Position der Fig. 24 zurückstellt.

Eine Variante mit einer anderen Realisierung der Endlagenfixierung ist in Fig. 27 und 28 gezeigt. Hier wird eine Kugel 684 durch Federkraft, z.B. mittels einer Kompressionsfeder 685, gegen einen nach innen zeigenden keilartigen Vorsprung 686 gedrückt, der z.B. am Innenrand des bogenförmigen Außenteils des Trägers 672' ausgebildet ist. Dies definiert die beiden Endpositionen, die jeweils in Fig. 27 und 28 gezeigt sind und zwischen denen der Sektor 671 je nach Betätigung hin und her schnappen kann.

Auf diese Weise erzwingt das federnde Element 674, 684 eine zwangsweise Bewegung des Sektors 671 über den Totpunkt zwischen den beiden Endpositionen. Die Endlagenfixierung mithilfe eines federnden Elements kann selbstverständlich auch bei anderen Realisierungen des Verschubelements der Radkranzsektoren, einschließlich der hier gezeigten Ausführungsformen der Erfindung, zum Einsatz kommen und ist nicht auf jenes der Fig. 22 eingeschränkt.

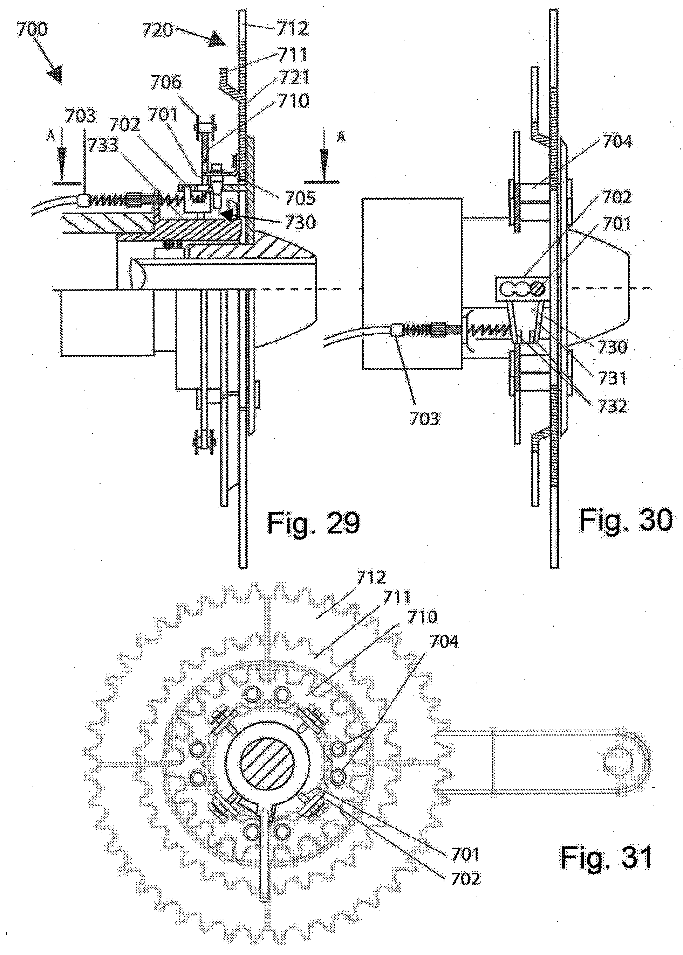

Bei noch einem weiteren Aspekt der Erfindung gemäß Fig. 29 bis 31 erfolgt das Einbringen der Schaltkraft über eine längere Winkelstrecke durch Auflaufen des Zahnkranzsektors auf eine Rampe, welche axial federnd gehalten wird. Zugleich ist ein rasches Auslösen durch punktuelles Entriegeln aus der federvorgespannten Lage möglich.

In dieser Ausführungsform einer Schaltung 700 können sich die zum gleichen Winkelbereich gehörenden Sektoren 711, 712 der verschiedenen Zahnkränze (mit Ausnahme wiederum des kleinsten Zahnkranzes) zueinander starr befestigt auf einem Sektorblock 720 befinden. Dieser axial bewegliche Block 720 der Zahnkranzsektoren wird durch Krafteinwirkung auf einen Zapfen 701 axial verschoben, der beispielsweise mithilfe einer federnden Halterung 705 am Sektorblock 720 befestigt ist und in radialer Richtung zur Mitte hin ragt. Ein Schaltschlitten 730 ist achsnahe vorgesehen, der auf einer Zylinderfläche 733 axial verschiebbar angeordnet und als Rampe, vorzugsweise als doppelte Rampe, ausgeführt. Beim Schaltvorgang wird über die Betätigung mittels eines in beide Richtungen gefederten Bowdenzugs 703 der Schaltschlitten 730 axial verfahren. Durch das Auflaufen des Zapfens 701 (im Zuge der Rotationsbewegung des Sektorblocks 720, zu dem der Zapfen 701 gehört) auf die seitlichen Leitschienen 731 des Schaltschlittens wird dieser gegen die Federn gespannt. Der Schältschlitten 730 weist am Ende eine radiale Rampe oder Erhöhung 732 auf, die den Bolzen radial anhebt und so aus der Raste 702 entriegelt. Dies hat zur Folge, dass der Zapfen 701 rasch in eine andere Öffnung der Raste 702 springt. Die Raste 702 definiert somit eine begrenzte Anzahl von Zwangspositionen für den Zapfen 701, die jeweils einem Gang entsprechen.

Durch diese Konstruktionsweise wird ermöglicht, den Schaltvorgang sehr kurz zu halten, sodass der zur Verfügung stehende, freien Bereich der Kette 706 ausreichend ist, um den Schaltvorgang während der Rotation der Einheit durchzuführen. Es sind auf diese Weise keine weiteren Umlenkrollen nötig um den freien Bereich zu vergrößern.

Ein besonderer Vorzug dieser Ausführung ist, dass die Schaltkraft über einen relativ langen Weg in der Drehbewegung aufgebaut wird und an einem definierten Punkt durch Entriegeln der vorgespannten Einheit freigesetzt wird. Dies ermöglicht einen vorteilhaften, kurzen Schaltvorgang.

Auch in dieser Ausführung ist der Eingriff der zentralen Schaltmechanik durch den kleinen, ungeteilten Zahnkranz 710 auf die Sektorblöcke 720 durch einen Durchgriff innerhalb des Zahnkranzes 710 realisiert. Die Sektorblöcke 720, die in diesem Ausführungsbeispiel jeweils eine Grundplatte 721, einen mittleren Zahnkranzsektor 711 und einen großen Zahnkranzsektor 712 umfassen, sind axial auf je zwei Bolzen 704 gelagert. Dies ermöglicht eine sehr kompakte und hoch standardisierte Bauform und hohe Kompatibilität.

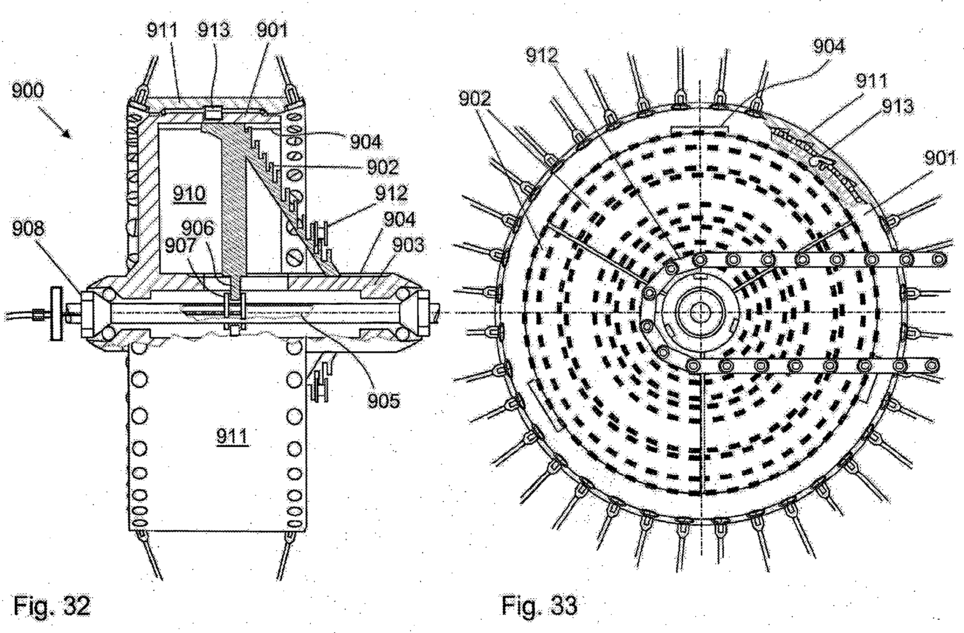

Noch ein Aspekt der Erfindung betrifft das bereits erwähnte Zusammenfassen von Zahnkranzsektoren zu Sektorenblöcken, die zusätzlich in einer gekapselten Einheit untergebracht sind - Kapselung. Dies ist beispielhaft an dem Ausrührungsbeispiel der Fig. 32 und 33 dargestellt, die eine Stirnansicht (mit der oberen Hälfte wiederum im Schnitt) bzw. eine Vorderansicht der gekapselten Stellmechanik 900 zeigen.

Ein Gehäuse 901 ("Schaltungsgehäuse") umgibt die Teile der Zahnkranzsektoren, die außerhalb der Fluchtebene der Kette 912 liegen, in Fig. 32 links der Fluchtebene. Beispielsweise ist das Gehäuse 901 im Inneren eines Radnabengehäuses 911 ausgeführt, an dem die Radspeichen des Rades befestigt werden können. (Anstelle von Radspeichen kann in einem speichenlosen Rad selbstverständlich ebenso die Radscheibe treten, die die Nabe mit dem Außenrand des Rades, insbesondere einer Felge, verbindet.) Das Gehäuse 901 ist zylinderförmig oder, wie in Fig. 32 gezeigt, becherförmig gestaltet und umgibt so einen Hohlraum 910. Zusätzlich kann mittig ein entlang der Drehachse verlaufender Zentralteil 903 vorgesehen sein, der vorteilhafter Weise mit dem Gehäuse drehfest (z.B. einstückig) ist. Die Zahnkranzsektoren der verschiedenen Gänge sind zu Blöcken 902 zusamniengefasst, von denen einer in Fig. 32 sichtbar ist. Die Blöcke 902 sind in dem Gehäuse 901 in axialer Richtung verfahrbar. Jeder Block 902 wird stufenweise soweit aus dem Gehäuse 902 ausgefahren, dass der Zahnkranzsektor des gewünschten Ganges in der Flucht der Kette zu liegen kommt. In Fig. 32 ist der Gang des kleinsten Zahnrades ausgewählt.

Jeder Block 902 ist beispielsweise am Innenrand des Gehäuses 901 und/oder an der Außenseite des Zentralteils 903 mithilfe von in Axialrichtung verlaufenden Rippen, Schienen oder Nuten 904 geführt, wodurch auch die Kraftübertragung auf das Rad erfolgt. Der Block 902 hat einen zur Radachse in einen zentralen Hohlraum 905 des Zentralteils 903 hineinragenden Vorsprung 906, der als Verschubelement im Sinne der Erfindung dient und in eine Ringnut 907 einer drehentkoppelten Stelleinrichtung 908 eingreift. Sie Stelleinrichtung 908 ist axial, d.h. längs der Achse des Rades, linear verstellbar und drehentkoppelt gelagert.

Die Radkranzblöcke - oder gegebenenfalls auch nur einzelne Radkranzsektoren - werden somit in einer axialen Bewegung durch die Ebene verfahren, die der Ebene der Radspeichen entspricht. Dies erbringt eine besonders günstige Raumausnutzung und Platzersparnis in dem Rad, das mit der Gangschaltung dieser Art versehen ist. Bei gegenüber der Radialrichtung geneigten Radspeichen wird hierbei bevorzugt der Ort der Befestigung der Radspeichen an der Radmitte (z.B. Radnabe) als Bezugsort genommen; als Bezugsort kann auch der axialer Richtung am nächsten zur der Radebene (oder am weitesten von dieser entfernt) liegende Teil der Speiche gewählt sein.

Wie ebenfalls in Fig. 26 ersichtlich kann ein Freilauf 913 zwischen dem Nabengehäuse 911, das der Anbindung der Radspeichen (bzw. des Radtellers bei einer speichenlosen Radkonstruktion) dient, und dem (Schaltungs)Gehäuse 901, das die Mechanik mit dem Sektorenblock 902 enthält, realisiert sein. Das Nabengehäuse 911 umgibt z.B. ring- oder becherartig das Gehäuse 901, der in dem Nabengehäuse 911 drehbar gelagert ist; Nabengehäüse 911 und Schaltungsgehäuse 901 bilden zusammen die Radnabe des Rades. Die Freilaufmechanik ist nach an sich bekannter Art ausgebildet, die die Drehung der Gehäuseteile um die Radachse (nur) in einer Drehrichtung zulässt, in der anderen dagegen blockiert. Falls ein Freilauf an dieser Stelle nicht erforderlich ist, kann er entfallen; die Gehäuseteile 901, 911 können dann miteinander starr verbunden oder auch einstückig, d.h. als ein Gehäuse, ausgebildet sein.

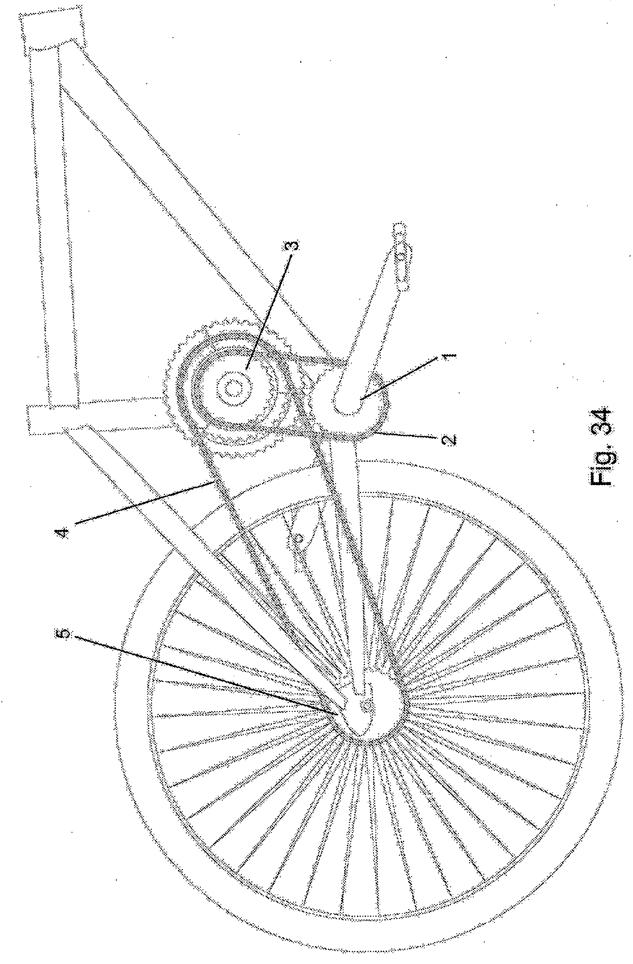

Eine Gangschaltung gemäß der Erfindung kann auf der Antriebswelle, z.B. der über Pedale angetriebenen Kurbelwelle eines Fahrrads, oder der Welle eines Rades wie z.B. das Hinterrad eines Fahrrads oder auf einer anderen Welle, z.B. eine Zwischenwelle, angebracht sein. Fig. 34 illustriert ein Beispiel mit einem zusammengesetzten Getriebe. Die Antriebskraft wird von der Kurbelwelle 1 über eine erste Kette 2 an das Zwischengetriebe 3 übertragen; von dort wird über eine zweite Kette 4 das Hinterrad 5 angetrieben. In Fig. 34 ist eine Variante gezeigt, bei der die Ketten 2 und 4 auf der gleichen Kranzgruppe laufen. In einer anderen Variante können die beiden Ketten auf verschiedenen Kranzgruppen arbeiten, beispielsweise können die beiden Ketten auf verschiedenen Seiten des Fahrrads angeordnet sein (d.h. jeweils rechts und links, in Fig. 34 könnte z.B. die Kette 2 hinter dem Rahmen, somit auf der linken Seite des Fahrrads befindlich sein), wobei die Welle des Zwischengetriebes von der einen zur anderen Seite vermittelt. Eine der Ketten oder beide können natürlich auch hier durch andere Zugmittel wie z.B. einem Riemen ersetzt sein.

Insbesondere ermöglicht die erfindungsgemäße Bauweise die Anordnung der Kette (genauer: der Fluchtebene der Kette) in einem normgemäßen Abstand zum Rahmen des Fahrrads von 50 mm.

Es versteht sich, dass die hier gezeigten und beschriebenen Aspekte und Ausführungsformen der Erfindung und deren Einzelheiten miteinander kombiniert werden können. Auch kann die Anzahl der Sektoren oder Teilstücke, die jeweils zu einem Radring (insbesondere Zahnradkranz) gehören, variieren und je nach Ausführungsform einen geeigneten Wert annehmen, beispielsweise zwei, drei, vier, fünf, sechs, acht oder mehr.

## Patentansprüche

1. Stellmechanik (200, 300, 500, 600, 660, 700, 800, 900) zum Einstellen eines Übersetzungsverhältnisses zwischen einem Zugmittel (206, 309, 512, 606, 706, 812, 912) und einem um eine Radachse drehbaren Radsatz, welcher zwei oder mehr Radblätter (202, 220, 230; 310, 320, 330; 510, 520; 610, 620, 630; 710, 711, 712; 810, 820, 830) umfasst, die wahlweise von dem Zugmittel umschlungen werden, wobei zumindest eines der Radblätter aus mehreren voneinander unabhängig stellbaren Radkranzsektoren (203, 204; 301, 302; 501; 621, 631; 661; 711, 712; 802, 803; 902) zusammengesetzt ist, wobei durch die Stellmechanik ein Verstellen der Radkranzsektoren in Bezug auf eine festbleibende Ebene ("Fluchtebene"), in der das Zugmittel den Radsatz umschlingt, in einer im Wesentlichen quer zu der Fluchtebene liegenden Richtung bewirkt wird, umfassend
- zumindest eine von einer Drehbewegung des Radsatzes entkoppelt gelagerte Stellkomponente (212; 304; 504a, 505; 730; 807; 908),
- mehrere mitdrehende Verschubelemente (216; 306; 504b; 701; 804, 805; 906), wobei jedem Radkranzsektor ein Verschubelement zugeordnet ist und jeder Radkranzsektor mit dem jeweils zugeordneten Verschubelement in Bezug auf die Drehung um die Radachse drehfest verbunden ist,
wobei mittels der zumindest einen Stellkomponente die Verschubelemente über jeweils drehfreie Kopplungen in zumindest axialer Richtung zwischen einer ersten und einer zweiten Position verschiebbar sind, wobei die erste Position eines Verschubelementes der Lage eines zugehörenden Radkranzsektors ausserhalb der Fluchtebene entspricht, wogegen ein in der zweiten Position befindliches Verschubelement auf den betreffenden Radkranzsektor, zumindest solange dieser sich ausserhalb der Fluchtebene befindet, eine Kraft zum Verrücken des betreffenden Radkranzsektors in die Fluchtebene ausübt, **dadurch gekennzeichnet, dass** die Radblätter verschiedene Umfangsradien aufweisen, wobei ein Radblatt (202, 310, 510, 610, 710, 810) einen kleinsten Umfangsradius aufweist und ungeteilt ist, und das ungeteilte Radblatt zumindest eine Öffnung aufweist, durch die zumindest ein Verschubelement (504b, 701) und/ oder zumindest ein einem verschubelement zugeordnetes Verbindungselement (503, 702) der Verbindung des Verschubelements mit dem betreffenden Radkranzsektor (501, 721) verläuft.

2. Stellmechanik nach Anspruch 1, **dadurch gekennzeichnet, dass** das zumindest eine Verschubelement durch jeweils eine federnde Verbindung (303, 503, 813), die ein Spiel in einer Richtung quer zur Fluchtebene ermöglicht, mit den zugehörenden Radkranzsektoren und/ oder der Stellkomponente verbunden ist.

3. Stellmechanik nach Anspruch 1 oder 2, **gekennzeichnet durch** eine Führungsscheibe (205, 311, 511, 811), die parallel zur Fluchtebene verläuft und mit dem Radsatz mitdrehend montiert ist.

4. Stellmechanik nach einem der Ansprüche 1 bis 3, **gekennzeichnet durch** zusätzliche, vorzugsweise als Blattfedern ausgeführte Federelemente (217, 307, 601, 508) zum Rückstellen der Radkranzsektoren in eine Ruheposition ausserhalb der Fluchtebene, wenn das zugeordnete Verschubelement seine erste Position einnimmt.

5. Stellmechanik nach einem der vorangehenden Ansprüche, **gekennzeichnet durch** den Radkranzsektoren (203, 204, 301, 302, 802, 803) zugeordnete Führungselementen in Form von Führungsbolzen (209, 804, 805) und/ oder Kipphalterungen (303), **durch** welche im Wesentlichen axiale Bewegung der Radkranzsektoren aufgrund der Krafteinwirkung **durch** das jeweils zugeordnete zumindest eine Verschubelement festgelegt wird.

6. Stellmechanik nach einem der vorangehenden Ansprüche, **dadurch gekennzeichnet, dass** die Radkranzsektoren (501, 640) gegenüber der Fluchtebene kippbar und mittels einer Feder (508, 601) befestigt sind, welche auf die Radkranzsektoren eine Kraft zur Bewegung aus der Fluchtebene ausübt.

7. Stellmechanik nach einem der vorangehenden Ansprüche, **dadurch gekennzeichnet, dass** die Radkranzsektoren (501) zumindest in axialer Richtung fest verbundene Führungsvorsprünge (507) aufweisen, die in einen zugeordneten Führungssteg (506) eingreifen, wenn der betreffende Radkranzsektor in der Fluchtebene liegt, wobei der Führungssteg (506) von einer Orehbewegung des Radsatzes entkoppelt gelagert ist.

8. Stellmechanik nach einem der vorangehenden Ansprüche, **dadurch gekennzeichnet, dass** das ungeteilte Radblatt in axialer Richtung unbeweglich auf dem Radsatz montiert ist.

9. Stellmechanik nach einem der vorangehenden Ansprüche, **dadurch gekennzeichnet, dass** jeweils in einem gleichen Winkelbereich liegende Radsektoren in einem Sektorblock zusammengefasst sind.

10. Stellmechanik nach Anspruch 9, **gekennzeichnet durch** ein Gehäuse (901), das um die Radachse angeordnet ist und das einen Hohlraum (910) umgibt, der zumindest teilweise seitlich der Fluchtebene liegt und in den ausserhalb der Fluchtebene befindliche Teile der Sektorblöcke (902) in axialer Richtung verfahrbar sind.

11. Stellmechanik nach Anspruch 10 in einem um die Radachse drehbaren Rad mit Speichen und/ oder einer Radscheibe, **dadurch gekennzeichnet, dass** das Gehäuse (901) innerhalb eines Nabengehäuses (911) angeordnet ist, die als nabenseitige Anschlussstelle für die Speichen bzw. Radscheibe dient, und gegebenenfalls gegenüber dem Nabengehäuse (911) mittels einer freilaufmechanik (913) drehbar ist.

12. Stellmechanik nach Anspruch 10 oder 11 in einem um die Radachse drehbaren Rad mit Speichen und/oder einer Radscheibe, **dadurch gekennzeichnet, dass** der Hohlraum (910) in einen axialen Bereich hineinragt, welcher der axialen Position der Speichen bzw. Radscheibe entspricht.

13. Stellmechanik nach einem der vorhergehenden Ansprüche, **dadurch gekennzeichnet, dass** die von der Drehbewegung des Radsatzes entkoppelt gelagerte(n) Stellkomponente(n) (908) in einem längs der Radachse verlaufenden zentralen Hohlraum (905) angeordnet und längs der Radachse linear verstellbar ist/ sind, wobei die drehfreie Kopplung durch zumindest ein Verschubelement in Form von zumindest einem in den zentralen Hohlraum (905) hineinragenden und in die Stellkomponente(n) (908) eingreifenden Vorsprung (906) realisiert ist.

14. Stellmechanik nach einem der vorhergehenden Ansprüche, **dadurch gekennzeichnet, dass** die Radkranzsektoren (661) gegenüber der Fluchtebene kippbar sind, nämlich mithilfe von Halteelementen (663), die achsnah in um eine quer zur Radachse verlaufende Drehachse (665) schwenkbarer Weise gelagert sind und sich von dort nach aussen erstrecken, wobei die Radkranzsektoren (661) gegebenenfalls über Trägerkomponenten (662) an äusseren Bereichen der Halteelemente (663) angebracht sind.

15. Stellmechanik nach einem der vorhergehenden Ansprüche, **dadurch gekennzeichnet, dass** die Radkranzsektoren (671) mit Federelementen (674, 684) ausgestattet sind, wobei jedes Federelement ein Umschnappen des jeweils zugeordneten Radkranzsektors zwischen einer Lage in der Fluchtebene und einer Ruhelage ausserhalb der Fluchtebene bewirkt.

16. Stellmechanik nach einem der vorangehenden Ansprüche, **dadurch gekennzeichnet, dass** die Radblätter Zahnräder und die Radkranzsektoren Zahnkranzsektoren sind, wobei das Zugmittel eine mit Zähnen der Zahnräder bzw. Zahnkranzsektoren vorteilhafter Weise formschlüssig zusammenwirkende Kette ist.

17. Gangschaltung mit einer auf ein Getrieberad montierten Stellmechanik nach einem der vorhergehenden Ansprüche.

18. Gangschaltung nach Anspruch 17 als Zwischengetriebe, das einer antreibenden Getriebegruppe und einer abtreibenden Getriebegruppe eines Fahrzeugs, insbesondere Fahrrads, zwischenschaltbar ist.

## Claims

1. A control mechanism (200, 300, 500, 600, 660, 700, 800, 900) for setting a transmission ratio between a traction means (206, 309, 512, 606, 706, 812, 912) and a wheel set that is rotatable about a wheel axle and includes two or more wheel blades (202, 220, 230; 310, 320, 330; 510, 520; 610, 620, 630; 710, 711, 712; 810, 820, 830) which can facultatively be wrapped around by the traction means, wherein at least one of the wheel blades is composed of a plurality of independently adjustable wheel rim sectors (203, 204; 301, 302; 501; 621, 631; 661; 711, 712; 802, 803; 902), wherein the control mechanism causes the adjustment of the wheel rim sectors relative to a fixed plane ("plane of alignment") in which the traction means wraps around the wheel set, in a direction substantially transverse to the plane of alignznent,
wherein
- at least one control component (212; 304; 504a, 505; 730; 807; 908) mounted decoupled from a rotary movement of the wheel set,
- a plurality of co-rotating thrust elements (216; 306; 504b; 701; 804, 805; 906), wherein a thrust element is each associated to the wheel rim sectors and each of the wheel rim sectors is connected to the respectively associated thrust element so as to be rotationally fixed relative to the rotation about the wheel axle,
wherein the thrust elements are each displaceable via respective rotation-free coupling between a first and a second position by the at least one control component at least in the axial direction, wherein the first position of a thrust element corresponds to the position of an associated wheel rim sector outside the plane of alignment, whereas a thrust element being in the second position exerts on the respective wheel rim sector, at least as long the latter is outside the plane of alignment, a force for displacing the respective wheel rim sector into the plane of alignment, **characterized in that** the wheel blades have different circumferential radii, one wheel blade (202, 310, 510, 610, 710, 810) having the smallest circumferential radius and being undivided and the undivided wheel blade comprises at least one opening, through which extend at least one thrust element (504b, 701) and/or at least one connection element (503, 702) associated to a thrust element and serving to connect the thrust element to the respective wheel rim sector (501, 721).

2. A control mechanism according to claim 1, **characterized in that** the at least one thrust element is connected to the associated wheel rim sectors and/or the control component by a resilient connection (303, 503, 813) providing a play in a direction transverse to the plane of alignment.

3. A control mechanism according to claim 1 or 2, **characterized by** a guide disc (205, 311, 511, 811) extending in parallel with the plane of alignment and mounted to co-rotate with the wheel set.

4. A control mechanism according to any one of claims 1 to 3, **characterized by** additional spring elements (217, 307, 601, 508), which are preferably configured as leaf springs, for returning the wheel rim sectors into a resting position outside the plane of alignment when the associated thrust element assumes its first position.

5. A control mechanism according to any one of the preceding claims, **characterized by** guide elements associated to the wheel rim sectors (203, 204, 301, 302, 802, 803) and configured as guide pins (209, 804, 805) and/or tilting brackets (303), through which substantially axial movements of the wheel rim sectors are defined, based on the action of force by the respectively associated at least one thrust element.

6. A control mechanism according to any one of the preceding claims, **characterized in that** the wheel rim sectors (501, 640) are tiltable relative to the plane of alignment and fastened by means of a spring (508, 601), which exerts a force onto the wheel rim sectors for movement out of the plane of alignment.

7. A control mechanism according to any one of the preceding claims, **characterized in that** the wheel rim sectors (501) comprise firmly connected, at least in the axial direction, guide projections (507) engaging an associated guide web (506) when the respective wheel rim sector is in the plane of alignment, said guide web (506) being mounted decoupled from a rotary movement of the wheel set.

8. A control mechanism according to any one of the preceding claims, **characterized in that** the undivided wheel blade is mounted on the wheel set so as to be immovable in the axial direction.

9. A control mechanism according to any one of the preceding claims, **characterized in that** sprocket sectors each located in the same angular region are combined to a sector block.

10. A control mechanism according to claim 9, **characterized by** a casing (901) arranged about the wheel axle and surrounding a cavity (910) at least partially located laterally of the plane of alignment, into which parts of the sector blocks (902) located outside the plane of alignment can be moved in the axial direction.

11. A control mechanism according to claim 10 provided in a wheel that is rotatable about the wheel axle and includes spokes and/or a wheel disc, **characterized in that** the casing (901) is arranged within a hub casing (911), which serves as hub-side connection site for the spokes or wheel disc, respectively, and is optionally rotatable relative to the hub casing (911) by the aid of a freewheel mechanism (913).

12. A control mechanism according to claim 10 or 11 provided in a wheel that is rotatable about the wheel axle and includes spokes and/or a wheel disc, **characterized in that** the cavity (910) extends into an axial region corresponding to the axial position of the spokes or wheel disc, respectively.

13. A control mechanism according to any one of the preceding claims, **characterized in that** the control component(s) (908) mounted decoupled from the rotary movement of the wheel set is/are arranged in a central cavity (905) extending along the wheel axle and is/are linearly adjustable along the wheel axle, said rotationally free coupling being realized by thrust elements in the form of projections (906) projecting into the central cavity (905) and engaging the control component(s) (908).

14. A control mechanism according to any one of the preceding claims, **characterized in that** the wheel rim sectors (661) are tiltable relative to the plane of alignment by the aid of retaining elements (663) mounted close to the axle in such a manner as to be pivotable about an axis of rotation (665) extending transversely to the wheel axle, and extend outwardly therefrom, wherein the wheel rim sectors (661) are attached to outer regions of the retaining elements (663), optionally via carrier components (662).

15. A control mechanism according to any one of the preceding claims, **characterized in that** the wheel rim sectors (671) are equipped with spring elements (674, 684), each spring element causing the switching of the respectively associated wheel rim sector between a position within the plane of alignment and a resting position outside the plane of alignment.

16. A control mechanism according to any one of the preceding claims, **characterized in that** the wheel blades are sprockets and the wheel rim sectors are sprocket sectors, wherein the traction means is a chain advantageously form-lockingly cooperating with teeth of the sprockets or sprocket sectors.

17. A gearshift comprising a control mechanism according to any one of the preceding claims mounted on a gearwheel.

18. A gearshift according to claim 19 used as a transmission gear and capable of being arranged between a driving gear group and a driven gear group of a vehicle, in particular bicycle.

## Revendications

1. Mécanique de réglage (200, 300, 500, 600, 660, 700, 800, 900) pour régler un rapport de transmission entre un moyen de traction (206, 309, 512, 606, 706, 812, 912) et un jeu de feuilles de roue adaptées pour tourner autour d'un axe de roue, qui comporte deux ou davantage de feuilles de roue (202, 220, 230 ; 310, 320, 330 ; 510, 520; 610, 620, 630; 710, 711, 712; 810, 820, 830) qui sont entourées alternativement par le moyen de traction, au moins une des feuilles de roue étant constituée de plusieurs secteurs de jante (203, 204 ; 301, 302 ; 501 ; 621, 631 ; 661 ; 711, 712 ; 802, 803 ; 902) réglables indépendamment les uns des autres, un réglage des secteurs de jante par la mécanique de réglage par rapport à un plan fixe (« plan de fuite ») dans lequel le moyen de traction entoure le jeu de feuilles de roue, étant effectué dans une direction sensiblement transversale au plan de fuite, où sont prévus
- au moins une composante de réglage (212 ; 304 ; 504a, 505 ; 730 ; 807 ; 908) montée de manière découplée d'un mouvement de rotation du jeu de feuilles de roue,
- plusieurs éléments de déplacement (216 ; 306 ; 504b ; 701 ; 804, 805 ; 906) participant à la rotation, un élément de déplacement étant associé à chaque secteur de jante et chaque secteur de jante étant solidaire en rotation, par rapport à la rotation autour de l'axe de roue, avec l'élément de déplacement associé,
où les éléments de déplacement sont aptes à être glissés, à l'aide de ladite au moins une composante de réglage, au moins dans une direction axiale entre une première position et une seconde position, via des accouplements libres de rotation, la première position d'un élément de déplacement correspondant à une position d'un secteur de jante associé en dehors du plan de fuite, alors qu'un élément de déplacement se trouvant dans la seconde position exerce sur le secteur de jante correspondant, au moins le temps que celui-ci de trouve en dehors du plan de fuite, une force pour le déplacement du secteur de jante correspondant dans le plan de fuite,
**caractérisée en ce que** les feuilles de roue ont différents diamètres de pourtour, une feuille de roue (202, 310, 510, 610, 710, 810) ayant un rayon de pourtour le plus petit et n'étant pas divisée, et la feuille de roue non divisée comportant au moins une ouverture par laquelle passe au moins un élément de déplacement (504b, 701) et/ou au moins une élément de liaison (503, 702) associé à un élément de déplacement, de la liaison de l'élément de déplacement avec le secteur de jante (501, 721) correspondant.

2. Mécanique de réglage selon la revendication 1, **caractérisée en ce que** ledit au moins un élément de déplacement est relié aux secteurs de jante associés et/ou la composante de réglage par une liaison résiliante (303, 503, 813) qui rend possible un jeu dans une direction transversale au plan de fuite.

3. Mécanique de réglage selon la revendication 1 ou 2, **caractérisée par** un disque de guidage (205, 311, 511, 811) qui s'étend parallèlement au plan de fuite et qui est monté solidaire en rotation avec le jeu de feuilles de roue.

4. Mécanique de réglage selon l'une quelconque des revendications 1 à 3, **caractérisée par** des éléments à ressort supplémentaires (217, 307, 601, 508), réalisés de préférence sous la forme de ressorts à lame, pour faire retourner les secteurs de jante dans une position de repos en dehors du plan de fuite, lorsque l'élément de déplacement associé prend sa première position.

5. Mécanique de réglage selon l'une quelconque des revendications précédentes, **caractérisée par** des éléments de guidage, associés aux secteurs de jante (203, 204, 301, 302, 802, 803), sous la forme de broches de guidage (209, 804, 805) et/ou de bascules (303) par lesquelles est déterminé un mouvement sensiblement axial des secteurs de jante en raison d'un exercice d'effort par ledit au moins un élément de déplacement respectivement associé.

6. Mécanique de réglage selon l'une quelconque des revendications précédentes, **caractérisée en ce que** les secteurs de jante (501, 640) sont adaptés pour pouvoir basculer par rapport au plan de fuite et qu'ils sont fxés par un ressort (508, 601) qui exerce un effort sur les secteurs de jante pour une sortie du plan de fuite.

7. Mécanique de réglage selon l'une quelconque des revendications précédentes, **caractérisée en ce que** les secteurs de jante (501) comportent des saillies de guidage (507) solidaires au moins en la direction axiale, qui s'engagent dans une barrette de guidage (506) lorsque le secteur de jante concerné est situé dans le plan de fuite, la barrette de guidage (506) étant montée découplée d'un mouvement de rotation du jeu de feuilles de roue.

8. Mécanique de réglage selon l'une quelconque des revendications précédentes, **caractérisée en ce que** la feuille de roue non divisée est monté sur le jeu de feuilles de roue de manière immobile en direction axiale.

9. Mécanique de réglage selon l'une quelconque des revendications précédentes, **caractérisée en ce que** des secteurs de roue situés dans une même zone angulaire sont réunis dans un bloc de secteurs.

10. Mécanique de réglage selon la revendication 9, **caractérisée par** un carter (901) qui est disposé autour de l'axe de roue et qui entoure un espace creux (910) situé au moins partiellement à côté du plan de fuite et dans lequel des blocs de secteurs (902) se trouvant en dehors du plan de fuite peuvent être déplacés en direction axiale.

11. Mécanique de réglage selon la revendication 10 dans une roue ayant des rayons et/ou un disque de roue, adaptée pour pouvoir tourner autour de l'axe de roue, **caractérisée en ce que** le carter (901) est disposé à l'intérieur d'un carter de moyeu (911) qui sert, du côté du moyeu, comme pièce de raccord pour les rayons ou le disque de roue, et qu'il est, le cas échéant, libre à tourner par rapport au carter de moyeu (911) à l'aide d'un mécanisme à roue libre (913).

12. Mécanique de réglage selon la revendication 10 ou 11 dans une roue ayant des rayons et/ou un disque de roue, adaptée pour pouvoir tourner autour de l'axe de roue, **caractérisée en ce que** l'espace creux (910) s'étend jusque dans une zone axiale qui correspond à la position axiale des rayons ou du disque de roue.

13. Mécanique de réglage selon l'une quelconque des revendications précédentes, **caractérisée en ce que** la (ou les) composante(s) de réglage (908) monté(s) de manière découplée du mouvement de rotation du jeu de feuilles de roue, est (ou sont) disposée(s) dans un espace creux central (905) s'étendant le long de l'axe de roue et est (ou sont) linéairement déplaçable(s) le long de l'axe de roue, l'accouplement libre de rotation étant réalisé par au moins un élément de déplacement sous la forme d'une saillie (906) s'étendant jusque dans l'espace creux central (905) et s'engageant dans la composante de réglage (908).

14. Mécanique de réglage selon l'une quelconque des revendications précédentes, **caractérisée en ce que** les secteurs de jante (661) sont adaptés pour pouvoir basculer par rapport au plan de fuite, à savoir à l'aide d'éléments de maintien (663) qui sont montés proche de l'axe de manière à pouvoir pivoter autour d'un axe de rotation (665) s'étendant transversalement à l'axe de roue, et s'étendent à partir de là vers l'extérieur, les secteurs de jante (661) étant montés le cas échéant à l'aide de composantes de maintien (662) sur des zones externes des éléments de maintien (663).

15. Mécanique de réglage selon l'une quelconque des revendications précédentes, **caractérisée en ce que** les secteurs de jante (671) sont pourvus d'éléments à ressort (674, 684), chaque élément à ressort conditionnant une alternance du secteur de jante respectivement associé entre une position dans le plan de fuite et une position de repos en dehors du plan de fuite.

16. Mécanique de réglage selon l'une quelconque des revendications précédentes, **caractérisée en ce que** les feuilles de roues sont des roues dentées et les secteurs de jante sont des secteurs de couronne dentée, le moyen de traction étant une chaîne coopérant, de marnière avantageuse par concordance de forme, avec des dents des roues dentées ou des secteurs de couronne dentée.

17. Transmission avec une mécanique de réglage selon l'une quelconque des revendications précédentes, montée sur une roue de transmission.

18. Transmission selon la revendication 17 comme transmission intermédiaire qui est adaptée pour être intercalée entre un groupe de transmission entraînant et un groupe de transmission entraîné d'un véhicule, notamment d'une bicyclette.
